# EUROPEAN PATENT APPLICATION

(11) **EP 4 641 508 A1**
(43) Date of publication of application: **29.10.2025**
(21) Application number: 23907299.4
(22) Date of filing: 14.09.2023
(51) Int. Cl.: G06T 13/20, G06T 19/20, G06T 7/20, G06T 7/70, G06F 40/274, G06F 40/205, G10L 15/26, G06T 17/20, G06T 15/08, G06V 10/74

(54) **METHOD AND SYSTEM FOR GENERATING THREE-DIMENSIONAL MOTION OBJECT BASED ON ARTIFICIAL INTELLIGENCE**

(30) Priority: 22.12.2022 KR 20220181230; 22.12.2022 KR 20220181231; 22.12.2022 KR 20220181232; 22.12.2022 KR 20220181233
(71) Applicant: Nationa Inc., Seoul 06771 (KR)
(72) Inventor: YOO, Su Yeon, Seoul 05507 (KR); CHOI, Jung Won, Seoul 05507 (KR)
(74) Representative: AWA Sweden AB
(86) International application number: PCT/KR2023/013842
(87) International publication number: WO 2024/136012

(57) **Abstract**

Provided are a method and apparatus for generating a three-dimensional motion image based on artificial intelligence. The method for generating a three-dimensional motion image based on artificial intelligence, according to an embodiment of the present invention, is performed by a computing apparatus and may comprise the steps of: acquiring a two-dimensional image; by using a machine-trained artificial intelligence module, identifying an object from the two-dimensional image and analyzing the motion of the identified object to generate three-dimensional modeling data of the object; and generating a three-dimensional motion image by using the three-dimensional modeling data. According to a three-dimensional motion image generation method according to the present invention, on the basis of artificial intelligence, the motion of an object may be extracted from a two-dimensional image and implemented as a three-dimensional motion image. In addition, three-dimensional mesh data of an object may be generated by using a two-dimensional image of the object.

## Description

### [Technical Field]

The present invention relates to a method and apparatus for generating a three-dimensional motion object based on artificial intelligence. More specifically, the present invention relates to a method and apparatus for generating a three-dimensional motion image using a two-dimensional image based on artificial intelligence.

Further, the present invention relates to a method and apparatus for generating an object image. More specifically, the present invention relates to a method and apparatus for generating an object image that is capable of fully restoring the entire shape of an object, by inferring a portion of the object that is hidden or cropped, based on artificial intelligence.

Further, the present invention relates to a method and apparatus for calculating motion similarity of an object based on artificial intelligence. More specifically, the present invention relates to a method and apparatus for calculating motion similarity between objects based on a three-dimensional mesh object.

Further, the present invention relates to a method and apparatus for generating a motion image from a sentence. More specifically, the present invention relates to a method and apparatus for automatically generating a motion image corresponding to the meaning of a sentence by analyzing a sentence in text format.

### [Background Art]

With the growth of the metaverse market, the demand for three-dimensional (3D) image generation technology, which is a core element, is rapidly increasing along therewith. Domestic and foreign companies are focusing on the metaverse, which reproduces the real world in a virtual world, as a next-generation growth engine, and interest in 3D imaging technology, which converts the real world into 3D and expresses it in the virtual world, which is a core technology of the metaverse, is also greatly increasing.

In the past, 3D imaging technology was mainly used in the field of gaming, but recently, it is being extended and applied to all industrial fields, and the application range is expanding to various content industries such as AR/VR, films, animation, broadcasting, etc.

However, despite the high interest in 3D imaging technology, the technical completeness thereof is insufficient. For example, in case of companies that generate AI humans, technology development is focused only on generating virtual faces through CG generation methods or Deep Fake generation methods, and technology development for motion reproduction, which recognizes motion and reproduces it as natural motion, is insufficient.

In addition, as the 3D imaging technology is being spread and applied to all industrial fields, the 3D authoring tool market is also continuously growing, but current 3D imaging authoring tools are only focused on generating static objects (architecture, interior, equipment, etc.), and research and development on technology that converts moving dynamic objects into 3D and expresses them in a three-dimensional space is insufficient.

### [Disclosure]

### [Technical Problem]

The technical object to be solved through embodiments of the present invention is to provide a method and apparatus for generating a three-dimensional motion image based on artificial intelligence, which is capable of extracting motion of an object from a two-dimensional image based on artificial intelligence and implementing the extracted motion as a three-dimensional motion image.

Another technical object to be solved through embodiments of the present invention is to provide a method and apparatus for generating a three-dimensional motion image based on artificial intelligence, which is capable of generating three-dimensional mesh data of an object using a two-dimensional image of the object based on artificial intelligence.

The technical object to be solved through embodiments of the present invention is to provide a method and apparatus for generating an object image, which is capable of automatically restoring a part of the body that is hidden or cropped, by inferring the whole body of the object based on artificial intelligence, even when the part of the body of the object is hidden or cropped in an image.

Another technical object to be solved through embodiments of the present invention is to provide a method and apparatus for generating an object image, in restoring a part of the body of an object is hidden or cropped, which is capable of restoring the part of the body, in a more detailed and realistic manner, by using a UV map, which is two-dimensional data including three-dimensional information, while also using an existing convolutional neural network-based model technology.

The technical object to be solved through embodiments of the present invention is to provide a method and apparatus for calculating motion similarity of an object based on artificial intelligence, which is capable of calculating motion similarity more accurately by mutually comparing pose and motion of an object using a three-dimensional mesh model, while also considering physical characteristics of the object.

Another technical object to be solved through embodiments of the present invention is to provide a method and apparatus for calculating motion similarity of an object based on artificial intelligence, which is capable of performing similarity analysis even for untrained poses and motions, by using a machine-trained artificial intelligence model based on metric learning.

The technical object to be solved through embodiments of the present invention is to provide a method and apparatus for automatically generating a motion image corresponding to the meaning of a sentence, by analyzing a sentence provided in text format.

Another technical object to be solved through embodiments of the present invention is to provide a method and apparatus for generating a motion image from a sentence, which is capable of generating an entire motion image by combining partial images corresponding to the meanings of words in the sentence, and inserting appropriate intermediate images so that connections between respective partial images become natural.

### [Technical Solution]

To solve the aforementioned technical objects, there is provided a method of generating a three-dimensional motion image based on artificial intelligence, performed by a computing apparatus. The method may include: acquiring a two-dimensional image; generating three-dimensional modeling data of an object by identifying the object from the two-dimensional image by using a machine-trained artificial intelligence module, and analyzing a motion of the identified object; and generating a three-dimensional motion image by using the three-dimensional modeling data.

As an embodiment, the generating of the three-dimensional modeling data may include: extracting pose data of the object from the two-dimensional image by using a first artificial intelligence module, and generating three-dimensional motion data representing a motion of the object based on the pose data.

As an embodiment, the two-dimensional image may include a plurality of frames that represent a motion of the object in a time series, the first artificial intelligence module may include: a first sub-module based on a convolutional neural network that extracts the pose data of the object from a first frame among the plurality of frames; and a second sub-module based on a recurrent neural network that provides information of a second frame among the plurality of frames to the first sub-module, and the second frame may be a preceding frame of the first frame in the time series.

As an embodiment, the generating of the three-dimensional motion image may include: merging the three-dimensional motion data with a pre-stored three-dimensional character object, and generating a motion image in which motion of the three-dimensional character object is expressed.

As an embodiment, the three-dimensional motion data may include key point data corresponding to joint sites of the object.

As an embodiment, the generating of the motion image in which motion of the three-dimensional character object is expressed may include: retargeting of matching joint positions of the three-dimensional motion data with joint positions of the three-dimensional character object based on the key point data.

As an embodiment, the generating of the three-dimensional modeling data further include: extracting shape information of the object from the two-dimensional image by using a second artificial intelligence module, and generating a three-dimensional mesh object in which a volume of the object is expressed based on the shape information.

As an embodiment, the generating of the three-dimensional motion image may include: merging the three-dimensional motion data with the three-dimensional mesh object, and generating a motion image in which motion of the three-dimensional mesh object is expressed.

As an embodiment, the second artificial intelligence module may include: a three-dimensional reconstruction module configured to generate a three-dimensional point cloud representing the object from the two-dimensional image; and a mesh modeling module configured to generate the three-dimensional mesh object by performing three-dimensional mesh modeling and texture mapping based on the three-dimensional point cloud.

To solve the aforementioned technical objects, there is provided an apparatus for generating a three-dimensional motion image based on artificial intelligence. The apparatus may include: a processor; a memory configured to load a computer program executed by the processor; and a storage configured to store the computer program, in which the computer program may include instructions to execute: acquiring a two-dimensional image; extracting pose data of an object from the two-dimensional image by using a machine-trained artificial intelligence model, and generating three-dimensional modeling data based on the pose data; and generating a three-dimensional motion image by using the three-dimensional modeling data.

To solve the aforementioned technical object, there is provided a method of generating an object image based on artificial intelligence, performed by a computing apparatus. The method may include: acquiring a first object image and a UV map corresponding to the first object image; and generating a second object image, in which a part of a body of an object is restored, based on the first object image and the UV map, in which the first object image may be an image in which the part of the body of the object is cropped, hidden, or blocked.

As an embodiment, the acquiring of the UV map may include: generating the UV map from the first object image using a machine-trained third artificial intelligence module.

As an embodiment, the third artificial intelligence module may be machine-trained by a method including: converting a three-dimensional mesh object corresponding to a two-dimensional object image to generate a first UV map corresponding to the two-dimensional object image; acquiring a plurality of training data based on the two-dimensional object image; providing the plurality of training data to the third artificial intelligence module, to output, by the third artificial intelligence module, a second UV map corresponding to the training data; and updating parameters of the third artificial intelligence module based on a result of comparing the first UV map and the second UV map.

As an embodiment, the three-dimensional mesh object may be generated using a machine-trained artificial intelligence module configured to extract the three-dimensional mesh object from the two-dimensional object image.

As an embodiment, the generating of the second object image may include: generating a foreground image and a background image respectively corresponding to the first object image using a fourth artificial intelligence module; and generating the second object image by synthesizing the foreground image and the background image.

As an embodiment, the fourth artificial intelligence module may include: an encoder configured to extract a feature vector based on the first object image and the UV map; a foreground generator configured to generate the foreground image using a first portion of the feature vector; and a background generator configured to generate the background image using a second portion of the feature vector, in which the encoder, the foreground generator, and the background generator may include a convolutional neural network.

As an embodiment, the fourth artificial intelligence module may be machine-trained based on a generative adversarial network model.

As an embodiment, the fourth artificial intelligence module may be machine-trained by a method including: extracting a first feature vector based on a two-dimensional object image generated using an original image and a UV map corresponding to the two-dimensional object image; generating a first foreground image corresponding to the two-dimensional object image using a first portion of the first feature vector; generating a first background image corresponding to the two-dimensional object image using a second portion of the first feature vector; generating a synthesized image based on the first background image and the first foreground image; and updating parameters of the fourth artificial intelligence module based on a result of comparing the first foreground image, the first background image, or the synthesized image with the original image.

As an embodiment, the two-dimensional object image may be an image in which a partial region of the original image is cropped or replaced with random noise.

To solve the aforementioned technical objects, there is provided an apparatus for generating an object image based on artificial intelligence. The apparatus may include: a processor; a memory configured to load a computer program executed by the processor; and a storage configured to store the computer program, in which the computer program may include instructions to perform: acquiring a first object image and a UV map corresponding to the first object image; and generating a second object image, in which a part of a body of an object is restored, based on the first object image and the UV map, in which the first object image may be an image in which the part of the body of the object is cropped, hidden, or blocked.

To solve the aforementioned technical objects, there is provided a method of calculating motion similarity of an object based on artificial intelligence, performed by a computing apparatus, according to an embodiment of the present invention. The method may include: inputting a source image and a target image; extracting a first feature vector from a first object corresponding to the source image, and a second feature vector from a second object corresponding to the target image; and calculating motion similarity between the first object and the second object based on the first feature vector and the second feature vector, in which the first object and the second object may be three-dimensional mesh objects, and the calculating of the motion similarity may be calculating the motion similarity by using a machine-trained artificial intelligence module based on metric learning.

As an embodiment, the first object may be a three-dimensional mesh object generated by inferring a volume of the object based on the object in the source image.

As an embodiment, the extracting may include: extracting the first feature vector and the second feature vector from the first object and the second object, by using a skinned multi-person linear (SMPL) model.

As an embodiment, the first feature vector may include: a mesh vector that represents each of a plurality of meshes constituting the first object, and a trend vector representing a trend of change of the mesh vector.

As an embodiment, the motion similarity may be calculated to be higher as a distance between the first feature vector and the second feature vector becomes closer.

As an embodiment, the method may further include: providing the target image as a similar image retrieval result of the source image, based on the motion similarity.

As an embodiment, the providing of the target image as the retrieval result may include: listing a plurality of target images, including the target image, based on each of their respective motion similarities.

As an embodiment, based on a user's selection of the target image provided as the retrieval result, the method may further include: merging the three-dimensional motion data of the second object into the first object, and generating a motion image in which the first object moves according to the three-dimensional motion data.

As an embodiment, the method may further include: outputting a similarity score between the source image and the target image, based on the motion similarity.

To solve the aforementioned technical objects, there is provided an apparatus for calculating motion similarity of an object based on artificial intelligence, according to an embodiment of the present invention. The apparatus may include: a processor; a memory configured to load a computer program executed by the processor; and a storage configured to store the computer program, in which the computer program may include instructions to execute: inputting a source image and a target image; extracting a first feature vector from a first object corresponding to the source image, and a second feature vector from a second object corresponding to the target image; and calculating motion similarity between the first object and the second object based on the first feature vector and the second feature vector, in which the first object and the second object may be three-dimensional mesh objects, and the calculating of the motion similarity may be calculating the motion similarity by using a machine-trained artificial intelligence module based on metric learning.

To solve the aforementioned technical objects, there is provided a method of generating a motion image from a sentence, performed by a computing apparatus, according to an embodiment of the present invention. The method may include: acquiring a sentence; identifying one or more words in the sentence; retrieving partial images corresponding to the one or more words from a database; and generating a motion image corresponding to the sentence by using the partial images.

As an embodiment, the identifying of the at least one word may include: identifying a part of speech of the at least one word.

As an embodiment, the at least one word may include a first word and a second word, and the retrieving from the database may include: retrieving a first partial image corresponding to the first word from the database; and retrieving a second partial image corresponding to the second word from the database.

As an embodiment, the at least one word may further include a third word associated with the first word, and the retrieving of the first partial image from the database may include: retrieving, from the database, a plurality of partial images based on the first word; and selecting the first partial image from among the plurality of partial images based on the third word.

As an embodiment, the generating of the motion image may include: determining an order of placement of the first partial image and the second partial image based on context of the sentence.

As an embodiment, the first partial image may be an image placed immediately before the second partial image, and the generating of the motion image may include: generating an intermediate image to be inserted between the first partial image and the second partial image.

As an embodiment, the intermediate image may be an image for connecting a pose of the object in a first frame of the first partial image and a pose of the object in a second frame of the second partial image.

As an embodiment, the generating of the intermediate image may include: identifying a first position of a key point of the object from the first frame of the first partial image; identifying a second position of the key point of the object from the second frame of the second partial image; and generating the intermediate image such that the position of the key point of the object changes from the first position to the second position in the intermediate image.

As an embodiment, the generating of the motion image may include: generating the motion image by sequentially connecting the first partial image, the intermediate image, and the second partial image.

As an embodiment, the acquiring of the sentence may include: acquiring the sentence based on text input through a user interface.

As an embodiment, the acquiring of the sentence may include: converting a voice signal input through a voice input means into text and acquiring the sentence.

To solve the aforementioned technical objects, there is provided an apparatus for generating a motion image from a sentence, according to an embodiment of the present invention. The apparatus may include: a processor; a memory configured to load a computer program executed by the processor; and a storage configured to store the computer program, in which the computer program may include instructions to execute: acquiring a sentence; identifying one or more words in the sentence; retrieving partial images corresponding to the one or more words from a database; and generating a motion image corresponding to the sentence using the partial images.

### [Advantageous Effects]

According to the present invention, a three-dimensional motion image can be generated from a two-dimensional image.

Further, according to the present invention, even when a part of the body of an object is hidden or cropped in an image, the hidden or cropped part of the body can be automatically restored by inferring the whole body of the object based on artificial intelligence.

Further, according to the present invention, by mutually comparing the pose and motion of an object using a three-dimensional mesh model, motion similarity can be calculated more accurately by even taking into account physical characteristics of the object.

Further, according to the present invention, a motion image corresponding to the meaning of a sentence can be automatically generated by analyzing a sentence provided in text format.

### [Description of Drawings]

FIG. 1 is a diagram representing an apparatus for generating a three-dimensional motion image based on artificial intelligence, according to an embodiment of the present invention.
FIG. 2 is a block diagram representing an exemplary configuration of the apparatus for generating a three-dimensional motion image in FIG. 1.
FIG. 3 is a flowchart representing a method of generating a three-dimensional motion image based on artificial intelligence, according to an embodiment of the present invention.
FIG. 4 is a flowchart representing an embodiment detailing step S120 of FIG. 3.
FIG. 5 is a block diagram exemplarily representing a detailed configuration of a first artificial intelligence module 110.
FIG. 6 is a block diagram exemplarily representing a detailed configuration of a second artificial intelligence module 120.
FIG. 7 is a flowchart representing an embodiment detailing step S130 of FIG. 3.
FIG. 8 is a flowchart representing an embodiment further detailing step S131 of FIG. 7.
FIG. 9 is a flowchart representing another embodiment detailing step S130 of FIG. 3.
FIG. 10 is a diagram representing an exemplary configuration of an apparatus for generating an object image that infers a part of an object based on artificial intelligence, according to an embodiment of the present invention.
FIG. 11 is a flowchart representing a method of generating an object image that infers a part of an object based on artificial intelligence, according to an embodiment of the present invention.
FIG. 12 is a diagram for supplementary description of step S210 of FIG. 11.
FIG. 13 is a flowchart representing an embodiment detailing step S220 of FIG. 11.
FIG. 14 is a diagram for supplementary description of the embodiment of FIG. 13.
FIG. 15 is a flowchart exemplarily representing a learning method of a third artificial intelligence module.
FIG. 16 is a diagram for supplementary description of the embodiment of FIG. 15.
FIG. 17 is a flowchart exemplarily representing a learning method of a fourth artificial intelligence module.
FIG. 18 is a diagram for supplementary explanation of the embodiment of FIG. 17.
FIG. 19 is a diagram representing an exemplary configuration of an apparatus for calculating motion similarity of an object based on artificial intelligence, according to an embodiment of the present invention.
FIG. 20 is a flowchart representing a method of calculating motion similarity of an object based on artificial intelligence, according to an embodiment of the present invention.
FIGS. 21 and 22 are diagrams for explaining characteristics when a three-dimensional mesh model is used in comparing motion similarity of objects.
FIGS. 23 and 24 are diagrams for supplementary description of step S520 of FIG. 20.
FIGS. 25 and 26 are diagrams for supplementary description of step S530 of FIG. 20.
FIG. 27 is a flowchart representing a method of calculating motion similarity of an object based on artificial intelligence, according to another embodiment of the present invention.
FIG. 28 is a diagram for supplementary description of step S540 of FIG. 27.
FIG. 29 is a flowchart representing a method of calculating motion similarity of an object based on artificial intelligence, according to still another embodiment of the present invention.
FIG. 30 is a diagram representing an exemplary configuration of an apparatus for generating a motion image, according to an embodiment of the present invention.
FIG. 31 is a flowchart representing a method of generating a motion image from a sentence, according to an embodiment of the present invention.
FIG. 32 is a flowchart representing an embodiment detailing step S620 of FIG. 31.
FIG. 33 is a diagram for supplementary description of the embodiment of FIG. 32.
FIG. 34 is a flowchart representing an embodiment detailing step S630 of FIG. 31.
FIG. 35 is a diagram for supplementary description of the embodiment of FIG. 34.
FIG. 36 is a flowchart representing an embodiment detailing step S631 of FIG. 34.
FIG. 37 is a diagram for supplementary description of the embodiment of FIG. 36.
FIG. 38 is a flowchart representing an embodiment detailing step S640 of FIG. 31.
FIGS. 39 and 40 are diagrams for supplementary description of the embodiment of FIG. 38.
FIG. 41 is a flowchart representing an embodiment detailing step S642 of FIG. 38.
FIG. 42 is a diagram for supplementary description of the embodiment of FIG. 41.
FIG. 43 is a block diagram representing an exemplary hardware configuration of a computing apparatus 500 in which various embodiments of the present invention are implemented.

### [Mode for Disclosure]

Hereinafter, the embodiments of the present invention will be described in detail with reference to the accompanying drawings. Advantages and features of the present invention and methods of achieving the advantages and features will be clear with reference to embodiments described in detail below together with the accompanying drawings. However, the technical spirit of the present invention is not limited to the exemplary embodiments disclosed below but will be implemented in various forms. The exemplary embodiments of the present invention are provided so that the technical spirit of the present invention is completely disclosed, and a person with ordinary skill in the art can fully understand the scope of the present invention. The technical spirit of the present invention will be defined only by the scope of the appended claims.

In giving reference numerals to components of the respective drawings, it should be noted that the same components will be designated by the same reference numerals, if possible, even though the components are illustrated in different drawings. In addition, in the description of the present invention, the specific descriptions of publicly known related configurations or functions will be omitted when it is determined that the specific descriptions may obscure the subject matter of the present invention.

Unless otherwise defined, all terms (including technical and scientific terms) used in the present specification may be used as the meaning which may be commonly understood by the person with ordinary skill in the art, to which the present invention belongs. In addition, terms defined in a generally used dictionary shall not be construed in ideal or excessively formal meanings unless they are clearly and specially defined in the present specification. The terms used in the present specification are for explaining the exemplary embodiments, not for limiting the present invention. Unless particularly stated otherwise in the present specification, a singular form also includes a plural form.

In addition, the terms such as first, second, A, B, (a), and (b) may be used to describe components of the present invention. These terms are used only for the purpose of discriminating one component from another component, and the nature, the sequences, or the orders of the components are not limited by the terms. When one component is described as being "connected", "coupled", or "attached" to another component, it should be understood that one component can be connected or attached directly to another component, and an intervening component can also be "connected", "coupled", or "attached" to the components.

Hereinafter, several embodiments of the present invention will be described in detail according to the attached drawings.

### -Three-dimensional motion image generation using two-dimensional image-

In the present embodiment, a method of analyzing motion of an object in a two-dimensional image, and implementing motion of the two-dimensional object as a motion image of a three-dimensional object, is proposed.

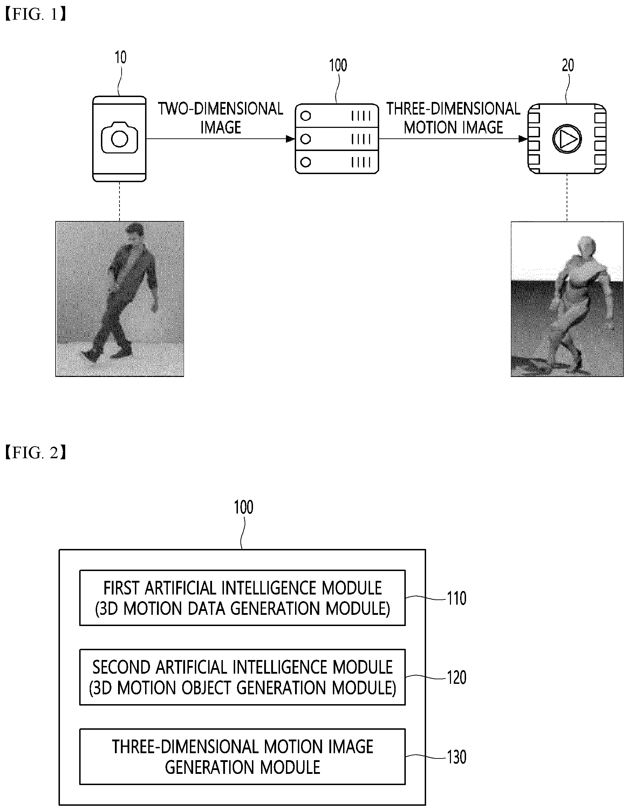

FIG. 1 is a diagram representing an apparatus for generating a three-dimensional motion image based on artificial intelligence, according to an embodiment of the present invention.

In FIG. 1, an apparatus 100 for generating a three-dimensional motion image receives a two-dimensional image through a user terminal 10 including a camera and the like, and generates a three-dimensional motion image 20 in which motion of a two-dimensional object 11 in the two-dimensional image is simulated, based thereon.

In the present invention, the apparatus 100 may also be referred to as a system or platform. In the three-dimensional motion image 20, motion of a three-dimensional mesh object 21 that simulates motion of the two-dimensional object 11 is expressed, and the three-dimensional mesh object 21 may be an object modeled after the shape of the two-dimensional object 11, or may be a pre-stored object shaped into a specific character.

As an embodiment, the user terminal 10 may be configured to be capable of mutual communication with the apparatus 100 for generating a three-dimensional motion image through a network (not illustrated). The network, depending on the installation environment, may be composed of a wired network, such as Ethernet, wired home network (Power Line Communication), telephone line communication device, or RS-serial communication, a wireless network such as a mobile communication network, wireless LAN (WLAN), Wi-Fi, Bluetooth, and ZigBee, or a combination thereof.

The user terminal 10, as a computing apparatus capable of communicating with the network, may include hardware or applications for capturing, editing, or transmitting the two-dimensional image. For example, the user terminal 10 may include a camera, a smartphone, a mobile phone, navigation, a computer, a notebook, a digital broadcasting terminal, a personal digital assistant (PDA), a portable multimedia player (PMP), a tablet PC, a game console, a wearable device, an Internet of Things (IoT) device, a virtual reality (VR) device, an augmented reality (AR) device, and/or a set-top box, etc.

FIG. 2 is a block diagram representing an exemplary configuration of the apparatus for generating a three-dimensional motion image in FIG. 1. With reference to FIG. 2, the apparatus 100 for generating a three-dimensional motion image may include a first artificial intelligence module 110, a second artificial intelligence module 120, and a three-dimensional motion image generation module 130.

The first artificial intelligence module 110, as a module that extracts and analyzes motion of an object in a two-dimensional image and generates three-dimensional motion data simulating the motion, may be a three-dimensional motion data generation module. The first artificial intelligence module 110, as a module including one or more machine-trained artificial neural networks based on a plurality of training data, may include an artificial neural network based on a convolutional neural network (CNN).

The second artificial intelligence module 120, as a module that generates a three-dimensional mesh object by extracting and analyzing the shape of an object in a two-dimensional image and then estimating the texture and volume of the object, may be a three-dimensional mesh object generation module. The second artificial intelligence module 120, as a module including one or more machine-trained artificial neural networks based on a plurality of training data, may include an artificial neural network based on a convolutional neural network.

The three-dimensional motion image generation module 130 is a module that generates a three-dimensional motion image based on the output results of the first artificial intelligence module 110 and the second artificial intelligence module 120.

For example, the three-dimensional motion image generation module 130 may apply the three-dimensional motion data generated by the first artificial intelligence module 110 to the three-dimensional mesh object generated by the second artificial intelligence module 120, and may generate a three-dimensional motion image in which motion of the three-dimensional mesh object is expressed. Alternatively, the three-dimensional motion image generation module 130 may apply the three-dimensional motion data generated by the first artificial intelligence module 110 to a pre-stored three-dimensional character object, and may generate a three-dimensional motion image in which motion of the three-dimensional character object is expressed.

As an embodiment, the three-dimensional motion image generation module 130 may also be a convolutional neural network-based artificial intelligence module.

Hereinafter, a specific operation of the apparatus 100 for generating a three-dimensional motion image and a method of generating a three-dimensional motion image by the operation will be described with reference to various embodiments.

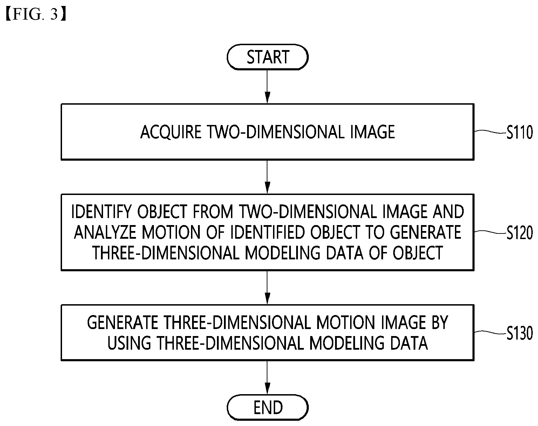

FIG. 3 is a flowchart representing a method of generating a three-dimensional motion image based on artificial intelligence, according to an embodiment of the present invention. The method of generating a three-dimensional motion image of FIG. 3 may be performed by the apparatus 100 for generating a three-dimensional motion image of FIG. 1. Therefore, in the following steps, when an executing entity is omitted, it is assumed that the executing entity is the apparatus 100 for generating a three-dimensional motion image.

In step S110, a two-dimensional image is acquired from a user terminal or the like. As an embodiment, the two-dimensional image is an image composed of a plurality of frames, and may be a motion image (or video) in which motion or movement of an object or subject is expressed.

In step S120, using a machine-trained artificial intelligence module, an object is identified from the two-dimensional image, and by analyzing motion of the identified object, three-dimensional modeling data of the object is generated.

As an embodiment, the three-dimensional modeling data may include three-dimensional motion data, in which motion of the identified object is expressed, and three-dimensional mesh data, in which the shape and volume of the identified object are expressed.

The generation of the three-dimensional modeling data may be performed by using one or more machine-trained artificial intelligences, and as an embodiment, the generation of the three-dimensional motion data and generation of the three-dimensional mesh data may be performed using different artificial intelligence modules, respectively.

For example, a first artificial intelligence module that is machine-trained using a plurality of training data may be pre-provided to extract motion of a moving object in a two-dimensional image as three-dimensional motion. As an embodiment, the first artificial intelligence module may be a module that estimates joints of an object from the object in the two-dimensional image, and infers motion of the object in the two-dimensional image as three-dimensional motion based on positions of the estimated joints.

When the two-dimensional image is input to the first artificial intelligence module, the first artificial intelligence module, after detecting the object from the input two-dimensional image, identifies a portion corresponding to the object through object segmentation, and extracts pose data of the object for each frame of the two-dimensional image. The pose data is data expressing a pose of the object with key points and lines, and may be skeleton data. Further, the first artificial intelligence module merges the pose data extracted from each frame in time sequence, and thereby, three-dimensional motion data in which continuous motion is expressed may be generated.

In addition, a second artificial intelligence module that is machine-trained using a plurality of training data may be pre-provided to extract shape of an object in the two-dimensional image in the form of a three-dimensional mesh. As an embodiment, the second artificial intelligence module may be a module that estimates the depth and volume of the object based on volume, width, etc. of the object in the two-dimensional image.

When the two-dimensional image is input to the second artificial intelligence module, the second artificial intelligence module, after detecting the object from the input two-dimensional image, identifies a portion corresponding to the object through object segmentation, and extracts pose data of the object for each frame of the two-dimensional image. Further, the second artificial intelligence module collects and merges pose data per angle extracted from each frame, and based on the merged result, may generate three-dimensional mesh data in which volume and texture of the object are expressed.

As an embodiment, the generation of the three-dimensional mesh data may be performed on a three-dimensional volume metric basis. The three-dimensional volume metric sets a location where the object initially positioned in the two-dimensional image as a reference point, and when the object moves to a different position in the two-dimensional image, by recognizing position information of the corresponding position, estimates size of the object, and then generates volume in the form of a three-dimensional mesh.

In step S130, a three-dimensional motion image is generated by using the previously generated three-dimensional modeling data.

The three-dimensional motion image is an image in which motion of a three-dimensional object is expressed, by merging the previously generated three-dimensional motion data into the three-dimensional object so that the three-dimensional object moves according to the three-dimensional motion data.

Here, the three-dimensional object may be a three-dimensional mesh object made of the previously generated three-dimensional mesh data, or may be a pre-stored three-dimensional character object.

For example, since the three-dimensional mesh object is made based on the shape of an object in the two-dimensional image, when the three-dimensional motion data is merged into the three-dimensional mesh object, a motion image may be generated in which a three-dimensional object simulating the shape of the object in the two-dimensional image reproduces motion of the object in the two-dimensional image.

Alternatively, in case where a three-dimensional character object that simulates a celebrity or a virtual character is used instead of the three-dimensional mesh object, when the three-dimensional motion data is merged into the three-dimensional character object, a motion image may be generated in which the three-dimensional character object reproduces motion of the object in the two-dimensional image.

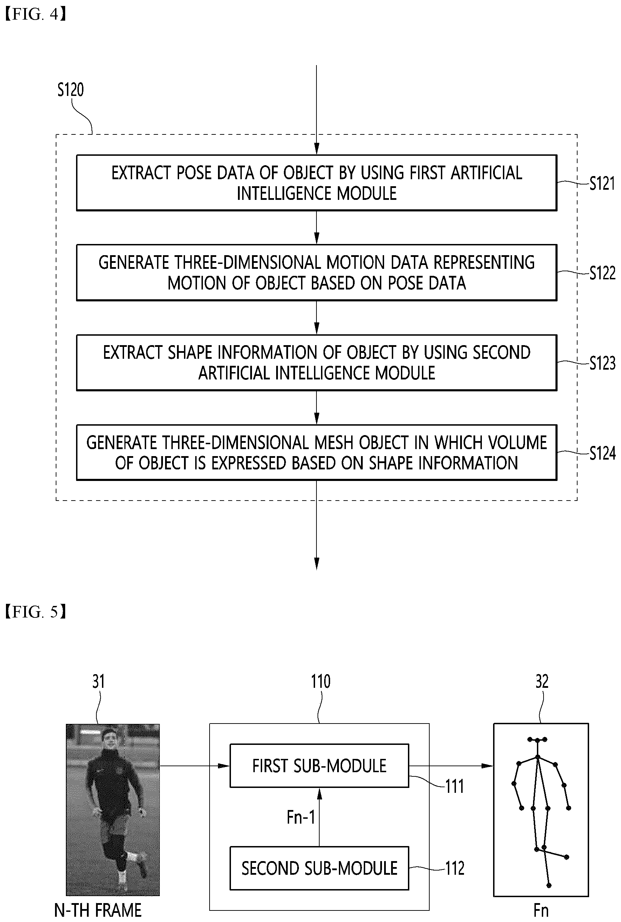

FIG. 4 is a flowchart representing an embodiment further detailing step S120 of FIG. 3. In the embodiment of FIG. 4, although each step is illustrated as being performed sequentially, the scope of the present invention is not limited thereto. For example, step S122 and step S124 may be performed in parallel simultaneously with each other.

In step S121, using the first artificial intelligence module, pose data of an object is extracted from the two-dimensional image.

In step S122, using the first artificial intelligence module, based on the extracted pose data, three-dimensional motion data representing motion of the object in the two-dimensional image is generated. The three-dimensional motion data may include key point data corresponding to joint sites of the object.

For supplementary description thereof, FIG. 5 is referenced.

FIG. 5 is a block diagram exemplarily representing a detailed configuration of a first artificial intelligence module 110. With reference to FIG. 5, the first artificial intelligence module 110 may include a first sub-module 111 and a second sub-module 112.

The first artificial intelligence module 110, by receiving a two-dimensional image as input, outputs three-dimensional motion data representing motion of an object in the two-dimensional image. In this case, the input two-dimensional image may include a plurality of frames that represent motion of the object in a time series.

The first sub-module 111 is a convolutional neural network module that extracts pose data of the object from each frame of the two-dimensional image.

The second sub-module 112 is a module based on a recurrent neural network (RNN) that provides information of a previous frame to the first sub-module 111.

When an n-th frame 31 among the plurality of frames of the two-dimensional image is input to the first artificial intelligence module 110, the first sub-module 111, after detecting the object from the frame 31, identifies a portion corresponding to the object through object segmentation, and extracts pose data 32 from the identified object.

As described above, the pose data 32 is data expressing the pose of the object with key points 32a and lines 32b, and may be skeleton data having three-dimensional coordinates (x, y, z). A key point 32a is a component that represents a joint of the object, identified by analyzing the object in the frame 31. A line 32b is a component that represents a skeleton of the object, identified by analyzing the object in the frame 31. Either one or both ends of the line 32b may be connected to the key point 32a, respectively.

Meanwhile, when the first sub-module 111 extracts the pose data 32 from the frame 31, information of a previous frame provided by the second sub-module 112, for example, information Fn-1 of the (n-1)th frame, may be referenced.

For example, since the three-dimensional motion data may be seen as a result of connecting continuous pose data, when the pose data 32 of the nth frame does not match with pose data of previous and subsequent frames, motion of the generated three-dimensional motion data will become unnatural. Therefore, in order to implement motion of the three-dimensional motion data more smoothly, the first sub-module 111, when extracting the pose data 32 of the n-th frame 31, may receive and reference the information Fn-1 of the previous frame from the second sub-module 112.

Returning back to FIG. 4, in step S123, shape information of an object is extracted from a two-dimensional image by using the second artificial intelligence module.

In step S124, using the second artificial intelligence module, based on the extracted shape information, a three-dimensional mesh object in which volume of the object is expressed is generated.

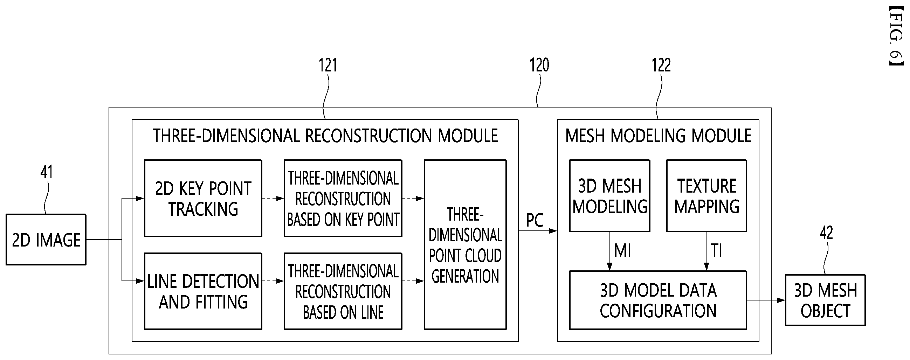

For supplementary description thereof, FIG. 6 is referenced.

FIG. 6 is a block diagram exemplarily representing a detailed configuration of a second artificial intelligence module 120. With reference to FIG. 6, the second artificial intelligence module 120 may include a three-dimensional reconstruction module 121 and a mesh modeling module 122.

The second artificial intelligence module 120, by receiving a two-dimensional image as input, outputs a three-dimensional mesh object in which volume and texture of the object in the two-dimensional image are expressed. In this case, the input two-dimensional image may include a plurality of frames in which shape of the object is expressed in various angles and/or positions.

The three-dimensional reconstruction module 121 analyzes key points and lines that represent the object from the two-dimensional image, and based thereon, generates a three-dimensional point cloud as shape information of the object.

The mesh modeling module 122, based on the generated three-dimensional point cloud, performs three-dimensional mesh modeling and texture mapping to generate a three-dimensional mesh object.

When a two-dimensional image 41 is input to the second artificial intelligence module 120, the three-dimensional reconstruction module 121 tracks key points of the object in the two-dimensional image 41, and reconstructs key point-based three-dimensional shape information. Along with that, the three-dimensional reconstruction module 121 detects and fits lines of the object in the two-dimensional image 41, and reconstructs line-based three-dimensional shape information. In the reconstruction of the three-dimensional shape information by the three-dimensional reconstruction module 121, predetermined reconstruction parameters may be used.

Further, the three-dimensional reconstruction module 121, using the reconstructed three-dimensional shape information based on key points and/or lines, generates a three-dimensional point cloud PC that estimates the three-dimensional shape of the object in the two-dimensional image. The generated three-dimensional point cloud PC is provided to the mesh modeling module 122.

The mesh modeling module 122 performs 3D mesh modeling based on the three-dimensional point cloud PC. The result of performing the 3D mesh modeling is output as mesh information MI, which represents the volume of the three-dimensional object. In the three-dimensional mesh modeling of the mesh modeling module 122, predetermined modeling parameters may be used. Along with that, the mesh modeling module 122 performs texture mapping based on the color image of the two-dimensional image 41. The result of performing texture mapping is output as texture information TI that represents texture of the three-dimensional object.

Further, the mesh modeling module 122, after constructing three-dimensional mesh data using the mesh information MI and the texture information TI, generates a three-dimensional mesh object 52 based thereon.

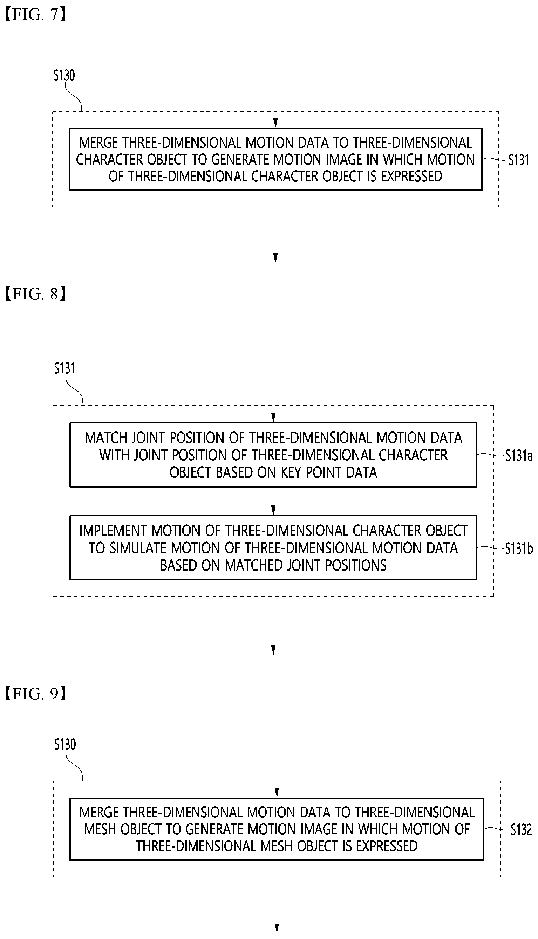

FIG. 7 is a flowchart representing another embodiment further detailing step S130 of FIG. 3. In FIG. 7, an embodiment is described in which the three-dimensional motion data generated in step S122 is applied to a pre-stored three-dimensional character object.

In step S131, the three-dimensional motion data is merged into the pre-stored three-dimensional character object, and a motion image in which motion of the three-dimensional character object is expressed is generated.

Meanwhile, the three-dimensional motion data is data made based on the input two-dimensional image, and the three-dimensional character object is a pre-stored object regardless of the two-dimensional image, so inconsistency may occur between the three-dimensional motion data and the three-dimensional character object. In order to resolve such inconsistency, a retargeting task to adjust the three-dimensional motion data to fit the three-dimensional character object is required. For supplementary description thereof, FIG. 8 is referenced.

FIG. 8 is a flowchart representing an embodiment further detailing step S131 of FIG. 7. In FIG. 8, an embodiment of retargeting is described in which joint positions of the three-dimensional motion data are adjusted to match joint positions of the three-dimensional character object.

In step S131a, based on key point data of the three-dimensional motion data, joint positions of the three-dimensional motion data are matched with joint positions of the three-dimensional character object. Here, the fact that the joint positions of the three-dimensional motion data are matched with the joint positions of the three-dimensional character object may mean, for example, that the joint positions of the three-dimensional motion data are adjusted so that the joint positions of the three-dimensional motion data match the joint positions of the three-dimensional character object.

For example, when the three-dimensional motion data is applied to the three-dimensional character object, physical characteristics of the two-dimensional object on which the three-dimensional motion data is based may be different from physical characteristics of the three-dimensional character object. Therefore, to eliminate inconsistency due to differences in physical characteristics between objects, each joint position (i.e., key point) of the three-dimensional motion data is adjusted to match joint positions (i.e., key points) of the three-dimensional character object.

In this case, the line of the three-dimensional motion data is also adjusted together based on the adjusted key points of the three-dimensional motion data. For example, in the original three-dimensional motion data, it is assumed that there are key points K1 (1,1,1) and K2 (2,2,2), and a line L1 connecting K1 and K2. When, through retargeting, the key points K1 and K2 are adjusted to K1 (1,2,2) and K2 (2,3,3), the line L1 is also adjusted to a line connecting (1,2,2) and (2,3,3).

In step S131b, based on the joint positions of the matched three-dimensional motion data, motion of the three-dimensional character object is implemented to simulate the motion of the three-dimensional motion data.

To this end, based on the adjusted joint positions (i.e., key points) and lines of the three-dimensional motion data, the motion of the three-dimensional motion data, for example, position, travel distance, and motion range of each key point and line, may be adjusted. Further, the adjusted motion of the three-dimensional motion data is merged into the three-dimensional character object, and motion of the three-dimensional character object is implemented.

The implemented motion of the three-dimensional character object may be output and stored as a three-dimensional motion image.

FIG. 9 is a flowchart representing an embodiment further detailing step S130 of FIG. 3. In FIG. 9, an embodiment is described in which the three-dimensional motion data generated in step S122 is applied to the three-dimensional mesh object generated in step S124.

In step S132, the three-dimensional motion data is merged into the previously generated three-dimensional mesh object, and a motion image in which motion of the three-dimensional mesh object is expressed is generated.

The three-dimensional mesh object is a three-dimensional object extracted from the original two-dimensional image, and by merging the three-dimensional motion data into the three-dimensional mesh object, it becomes possible to generate a three-dimensional motion image using a three-dimensional object that directly reflects the appearance of the object appearing in the two-dimensional image.

Since the three-dimensional mesh object and the three-dimensional motion data are generated from the same two-dimensional object, joint positions of the three-dimensional mesh object and joint positions of the three-dimensional motion data will match each other. Therefore, in the present embodiment, the retargeting task may be omitted.

According to the embodiments of the present invention described above, motion of an object may be extracted from a two-dimensional image based on artificial intelligence, and may be implemented as a three-dimensional motion image.

In addition, based on artificial intelligence, three-dimensional mesh data of the object may be generated using the two-dimensional image of the object.

### -Object image generation based on inference of whole body-

In the present embodiment, even when a part of the body of an object in an image is hidden or cropped, a method is proposed in which, based on artificial intelligence, as the whole body of the object is inferred, the hidden or cropped part of the body is automatically restored to generate the same as an object image.

In general, the technology for restoring a portion of a hidden or cropped image is referred to as in-painting technology when the portion to be restored is inside the image, and referred to as out-painting technology when it is outside the image. In the in-painting technology, the portion to be restored is filled in by referring to neighboring pixels of the portion to be restored, and in this case, it was difficult to distinguish between the object portion and the background portion in the image.

To effectively solve this problem, semantic information of the object was used as condition information, and in conventional image restoration technology, semantic information such as 2D segmentation masks or 2D key points was input as condition information. However, in case of the 2D segmentation mask, it was difficult to distinguish each portion constituting the object, so it was difficult to restore the image in detail, and in case of the 2D key point, there was a problem that it was difficult to predict the volume of the object, and it was difficult to clearly distinguish the object from the background, resulting in a problem of lower quality of the restored image.

Accordingly, in the present embodiment, a method is proposed to restore an image based on 3D information containing more information, thereby enabling more detailed and realistic image restoration.

Meanwhile, currently widely used artificial intelligence-based image analysis technologies are often optimized for two-dimensional data. Therefore, in the present embodiment, instead of directly using three-dimensional information such as a three-dimensional mesh model, image restoration is performed using a UV map, which is two-dimensional data containing three-dimensional information. Through this, a method is proposed that enables the use of various artificial intelligence model design technologies currently in use while restoring high-quality realistic images.

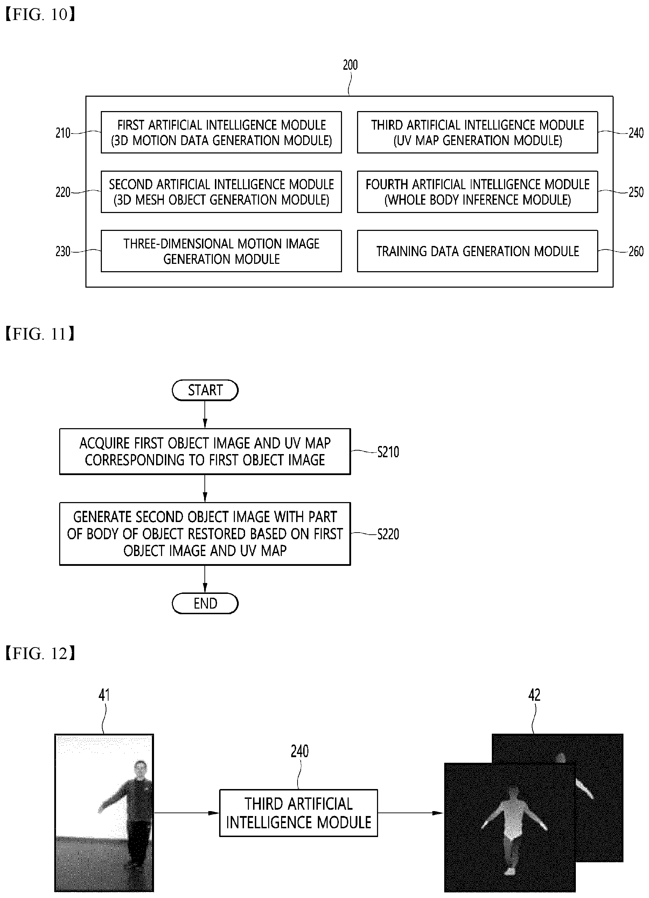

FIG. 10 is a diagram representing an exemplary configuration of an apparatus for generating an object image that infers a part of an object based on artificial intelligence, according to an embodiment of the present invention. With reference to FIG. 10, an apparatus 200 for generating an object image may include a first artificial intelligence module 210, a second artificial intelligence module 220, a three-dimensional motion image generation module 230, a third artificial intelligence module 240, a fourth artificial intelligence module 250, and a training data generation module 260.

The apparatus 200 for generating an object image may have some configurations identical to those of the apparatus 100 for generating a three-dimensional motion image in FIG. 2. For example, the first artificial intelligence module 210, the second artificial intelligence module 220, and the three-dimensional motion image generation module 230 may respectively have the same configuration as the first artificial intelligence module 110, the second artificial intelligence module 120, and the three-dimensional motion image generation module 130 in FIG. 2. Accordingly, to avoid redundant description, specific description of the first artificial intelligence module 210, the second artificial intelligence module 220, and the three-dimensional motion image generation module 230 will be omitted in the present embodiment.

The third artificial intelligence module 240 is a UV map generation module that, for an object image in which a part of the body of the object is cropped, hidden, or blocked, generates a UV map corresponding to the object image by using a CNN-based artificial neural network. Since the specific definition and configuration of the UV map are widely known in the field of image processing technology to which the present technology pertains, specific description thereof will be omitted here.

The fourth artificial intelligence module 250 uses a CNN-based artificial neural network to generate an object image in which the part of the body is restored, from the object image and the UV map. In an embodiment, the object image in which the part of the body is restored may be an image in which the whole body of the object is displayed.

The training data generation module 260 generates training data used for machine learning of the third artificial intelligence module 240 and/or the fourth artificial intelligence module 250.

The specific functions and/or learning method of the third artificial intelligence module 240, the fourth artificial intelligence module 250, and the training data generation module 260 will be described in more detail with reference to FIG. 11 and the followings.

FIG. 11 is a flowchart representing a method of generating an object image that infers a part of an object based on artificial intelligence, according to an embodiment of the present invention. The method of generating an object image of FIG. 11 may be performed by the apparatus 200 for generating an object image of FIG. 10. Therefore, in the following steps, when an executing entity is omitted, it is assumed that the executing entity is the apparatus 200 for generating an object image.

In step S210, a first object image and a UV map corresponding to the first object image are acquired. Here, the first object image may be an image in which a part of the body of the object is cropped, hidden, or blocked.

The UV map may be acquired by the third artificial intelligence module 240. For supplementary description thereof, FIG. 12 is referenced.

In FIG. 12, the third artificial intelligence module 240 is a machine-trained artificial intelligence module to output a UV map corresponding to the whole body of an object when an image in which a part of the body of the corresponding object is missing (e.g., cropped, hidden, or blocked) is input, may be an artificial intelligence module based on a convolutional artificial neural network.

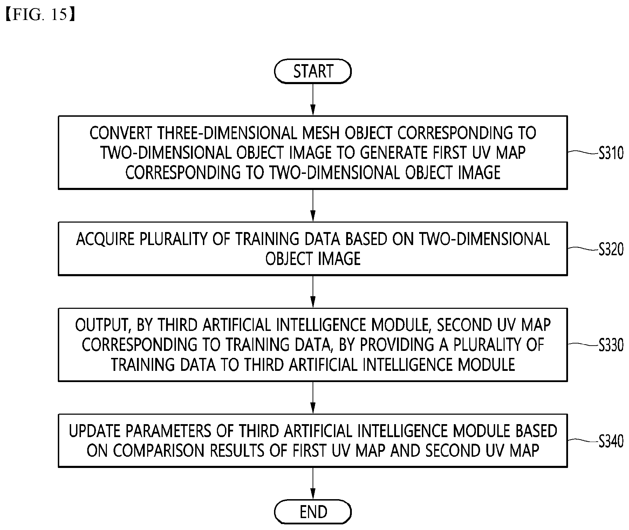

For example, as illustrated in FIG. 12, when a first object image 41 in which one arm of the object is cropped is input to the third artificial intelligence module 240, the third artificial intelligence module 240 uses the internal machine-trained artificial neural network to output a UV map 42 corresponding to the whole body of the object. Meanwhile, the machine learning method of the third artificial intelligence module 240 will be described later with reference to FIG. 15 and thereafter.

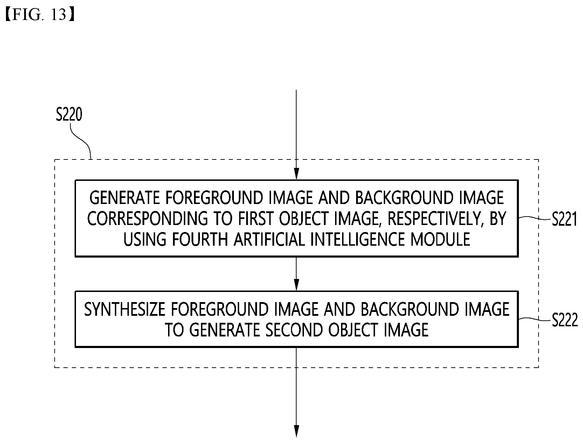

Returning back to FIG. 11, in step S220, based on the first object image and the UV map, a second object image in which a part of the body of the object is restored is generated. The second object image may be generated by the fourth artificial intelligence module 250. For supplementary description thereof, FIG. 13 is referenced.

FIG. 13 is a flowchart representing an embodiment detailing step S220 of FIG. 11.

In step S221, using the fourth artificial intelligence module, a foreground image and a background image corresponding to the first object image are respectively generated. Here, the foreground image may refer to an image in which the object is displayed, and the background image may refer to an image in which the background of the object is displayed.

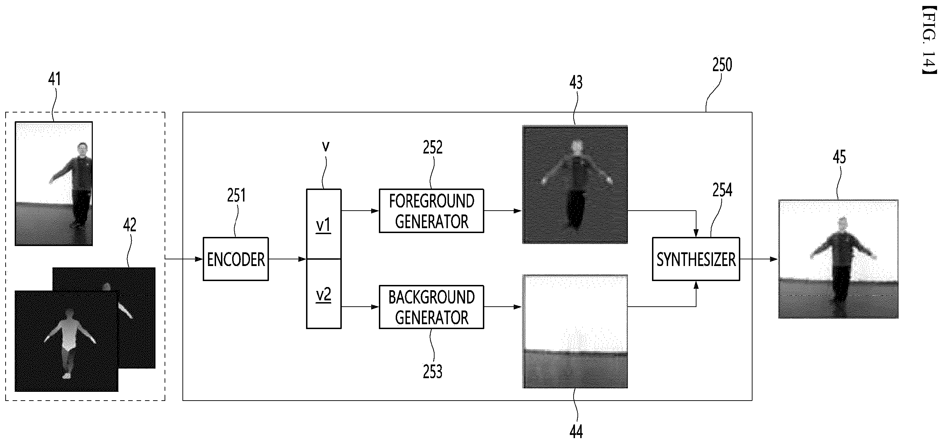

In step S222, the previously generated foreground image and background image are synthesized, and thereby a second object image, in which a part of the body of the object is restored, is generated. For detailed description thereof, FIG. 14 is referenced.

With reference to FIG. 14, the specific configuration of the fourth artificial intelligence module 250 is illustrated. The fourth artificial intelligence module 250 may include an encoder 251, a foreground generator 252, a background generator 253, and/or a synthesizer 254. However, this is an illustrative configuration of the fourth artificial intelligence module 250, and the scope of the present invention is not limited thereto. For example, the fourth artificial intelligence module 250 may further include other components in addition to the encoder 251, foreground generator 252, background generator 253, and/or synthesizer 254 illustrated in FIG. 14.

The encoder 251 receives the first object image 41 and the UV map 42 as inputs, and based thereon, extracts a feature vector v.

The foreground generator 252 uses a first portion v1 of the feature vector v to generate a foreground image 43 corresponding to the first object image 41.

The background generator 253 uses a second portion v2 of the feature vector v to generate a background image 44 corresponding to the first object image 41. In an embodiment, the first portion v1 may be one half of the feature vector v, and the second portion v2 may be the other half of the feature vector v.

The synthesizer 254 synthesizes (or blends) the generated foreground image 43 and background image 44, and generates a second object image 45 in which a part of the body of the object is restored.

In an embodiment, the encoder, the foreground generator, and the background generator may be configured to include convolutional neural networks, and may be respectively configured to be machine-trained to extract the feature vector based on the object image and the UV map, generate the foreground image using the first portion of the feature vector, and generate the background image using the second portion of the feature vector.

According to the configurations described above, when the first object image 41 and the UV map 42 are input to the fourth artificial intelligence module 250, the fourth artificial intelligence module 250 uses an internal machine-trained artificial neural network to generate the foreground image 43 and background image 44 corresponding to the first object image 41, and generates the second object image 45 in which the cropped part of the body of the object is restored, by synthesizing (blending) the generated foreground image 43 and background image 44.

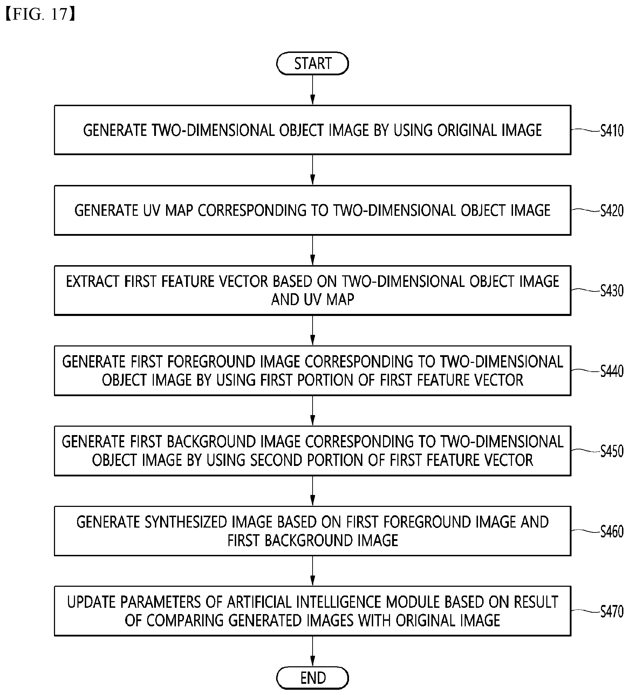

In an embodiment, the fourth artificial intelligence module 250 may be a machine-trained module based on a generative adversarial network model. The machine learning method of the fourth artificial intelligence module 250 will be described later with reference to FIG. 17 and thereafter.

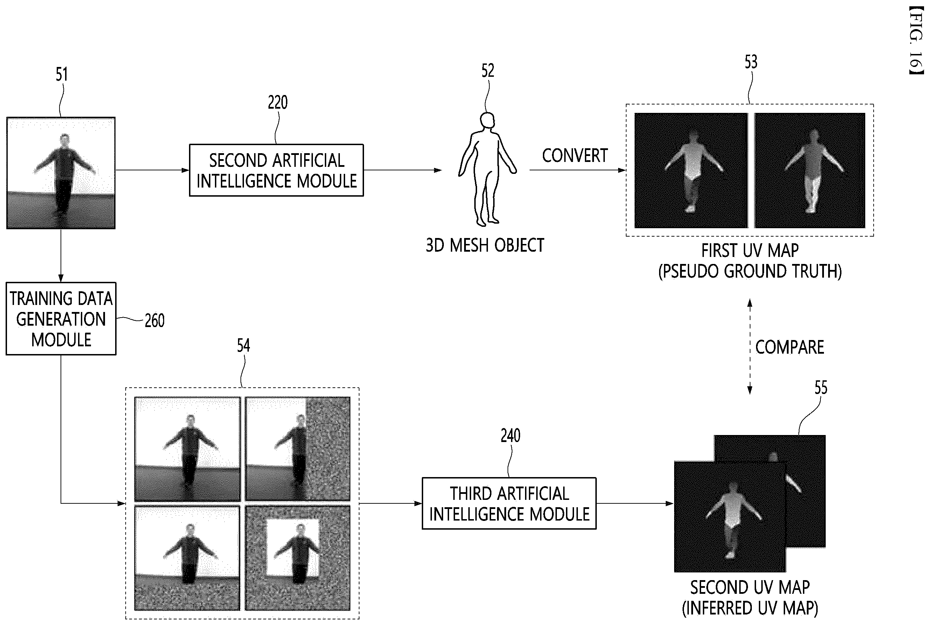

FIG. 15 is a flowchart exemplarily representing a learning method of a third artificial intelligence module. This will be described with reference to FIG. 15 and FIG. 16 together.

First, in step S310, a three-dimensional mesh object corresponding to a two-dimensional object image is converted, and a first UV map corresponding to the two-dimensional object image is generated.

With reference to FIG. 16, a two-dimensional object image 51, which is an original image including the whole body of the object, is illustrated. The two-dimensional object image 51 is input to the second artificial intelligence module 220, and the second artificial intelligence module 220 outputs a three-dimensional mesh object 52 corresponding to the two-dimensional object image 51 therefrom. The second artificial intelligence module 220 is a machine-trained artificial intelligence module that generates a three-dimensional mesh object by extracting and analyzing the shape of an object in a two-dimensional image and then estimating the texture and volume of the object, and since the specific functions and operations of the second artificial intelligence module 220 have been described in detail earlier, the description thereof will be omitted here.

Further, by converting the three-dimensional mesh object 52, a first UV map 53 corresponding to the original image, which is the two-dimensional object image 51, is generated. In general, converting a three-dimensional mesh object to generate a UV map corresponding thereto may be easily performed through a predetermined mathematical conversion, and this method is also widely known in the art. Therefore, a specific description of the method of converting the three-dimensional mesh object into a UV map will be omitted here. In an embodiment, the first UV map 53 may be used as a pseudo ground truth for evaluating the inference result of the third artificial intelligence module 240.

In step S320, based on the two-dimensional object image, a plurality of training data is acquired. The generation of the plurality of training data may be performed using the training data generation module 260.

Specifically, as a manner of randomly cropping, hiding, or blocking a partial region of the two-dimensional object image 51, and filling the cropped, hidden, or blocked portion with random noise, a plurality of training data 54 may be acquired.

In step S330, the plurality of training data is provided to the third artificial intelligence module, and a second UV map corresponding to the training data is output by the third artificial intelligence module.

The third artificial intelligence module 240 is a convolutional neural network-based artificial intelligence module, which is designed to infer and output a UV map corresponding to the whole body of the object, by receiving an image, in which a part of the body of the object is cropped, hidden, or blocked, as an input.

When the plurality of training data 54 is input to the third artificial intelligence module 240, the third artificial intelligence module 240 outputs a second UV map 55 corresponding to the plurality of training data 54, by the motion of its internal artificial neural network.

In step S340, based on the result of comparing the first UV map and the second UV map, the parameters of the third artificial intelligence module are updated.

In an embodiment, by calculating the difference between the first UV map 53 and the second UV map 55 using a predetermined loss function, an MSE loss (Loss) is calculated, and based on the MSE loss, the parameters of the third artificial intelligence module 240 may be updated.

Meanwhile, steps S310 to S340 may be repeated until the third artificial intelligence module 240 is sufficiently trained, or repeated a predetermined number of times.

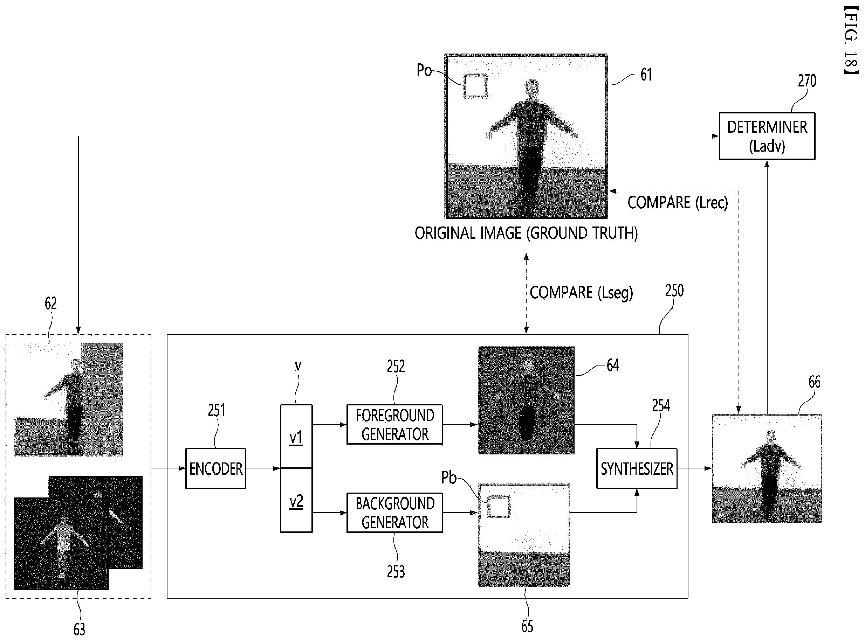

FIG. 17 is a flowchart exemplarily representing a learning method of a fourth artificial intelligence module. This will be described with reference to FIG. 17 and FIG. 18 together.

First, in step S410, a two-dimensional object image is generated using an original image.

A two-dimensional object image 62 may be an image in which a partial region of an original image 61 or a part of the body is randomly cropped, hidden, or blocked, or may be an image in which the cropped, hidden, or blocked portion is replaced with random noise. In an embodiment, the generation of the two-dimensional object image may be performed using the training data generation module 260.

In step S420, a UV map corresponding to the two-dimensional object image is generated.

In an embodiment, a UV map 63 may be an output of the third artificial intelligence module 240, which is generated by inputting the two-dimensional object image 62 to the third artificial intelligence module 240.

In step S430, based on the two-dimensional object image and the UV map, a first feature vector is extracted.

For example, when the two-dimensional object image 62 and the UV map 63 are input to the encoder 251, the encoder 251 outputs a first feature vector v corresponding thereto, based on the two-dimensional object image 62 and the UV map 63.

In an embodiment, the two-dimensional object image 62 and the UV map 63, as concatenated data, may be input to the encoder 251.

In step S440, a first foreground image corresponding to the two-dimensional object image is generated using a first portion of the first feature vector.

For example, when the first feature vector v is extracted from the encoder 251, the foreground generator 252 generates a first foreground image 64, in which a part of the body of the object is restored, using the first portion v1 of the first feature vector v.

In step S450, a first background image corresponding to the two-dimensional object image is generated using a second portion of the first feature vector.

For example, the background generator 253 generates a first background image 65, in which the background of the object is displayed, using the second portion v2 of the first feature vector v. In this case, the second portion v2 may be the remaining portion of the first feature vector v excluding the first portion v1.

In step S460, a synthesized image is generated based on the first foreground image and the first background image.

For example, the synthesizer 254 may synthesize (or blend) the first foreground image 64 and the first background image 65, and generate a synthesized image 66.

In step S470, based on the result of comparing the first foreground image, first background image, and/or the synthesized image with the original image, the parameters of the fourth artificial intelligence module are updated.

For example, by calculating the difference between the feature vector vf of the first foreground image 64 and the feature vector vo of the original image 61, a segmentation loss Lseg may be calculated. The segmentation loss Lseg may be used to update the parameters of the foreground generator 252.

Alternatively, by calculating the difference between the first background image 65 and the original image 61, a patch loss Lpatch may be calculated. Specifically, the distance between the patches Pb and Po at the corresponding positions in the first background image 65 and the original image 61 may be calculated as the patch loss Lpatch. The patch loss Lpatch may be used to update the parameters of the background generator 253.

Alternatively, based on the result of comparing the synthesized image 66 and the original image 61, a reconstruction loss Lrec may be calculated. The reconstruction loss Lrec is a defined loss value for making the inferred and output synthesized image 66 more similar to the original image 61.

Alternatively, based on the result of a determiner 270 determining whether the synthesized image 66 is genuine, an adversarial loss Ladv may be calculated. The adversarial loss Ladv is a defined loss value for preventing the synthesized image 66, output by the fourth artificial intelligence module 250, from becoming blurry and making it a more realistic image. The reconstruction loss Lrec and the adversarial loss Ladv may be used to update the parameters of the fourth artificial intelligence module 250.

Meanwhile, steps S410 to S470 may be repeated until the third artificial intelligence module 240 is sufficiently trained, or repeated a predetermined number of times.

According to the embodiments of the present invention described above, even when a part of the body of an object is hidden or cropped in an image, the hidden or cropped part of the body can be automatically restored by inferring the whole body of the object based on artificial intelligence.

In addition, by using a UV map, which is a two-dimensional data containing three-dimensional information, to restore the hidden or cropped part of the body of the object, it is possible to restore the part of the body in a more detailed and realistic manner, while still taking advantage of the existing convolutional neural network-based model technologies.

### -Motion similarity calculation of three-dimensional mesh object based on metric learning-

In the present embodiment, a technology is proposed in which the motion of an object in a source image is recognized in a manner of a three-dimensional mesh, and the similarity between motions of objects is calculated using a metric learning technology.

Recently, with the development of camera equipment and the expansion of the image content market, technologies for estimating the pose or motion of an object, especially a human object, based on images have been actively researched. In particular, research on comparing the motion of an object or calculating similarity thereof by analyzing only an image in the image through an artificial intelligence model, without attaching markers, sensors, or the like to the body, is just beginning.

Conventional artificial intelligence model-based object motion estimation technologies are generally based on a 2D skeleton model. This is a model that extracts joint points of the body and lines connecting each joint point, and estimates the motion of the object based on the motion of the joint points and the lines, and although it has an advantage of estimating and comparing the motion of the object in a concise manner, there was a limitation in that it was difficult to distinguish facial expressions or hand shapes and difficult to recognize detailed motions.

Accordingly, in the present embodiment, by inferring the motion of an object based on a three-dimensional mesh model, a method and apparatus for calculating motion similarity of an object based on artificial intelligence are provided, which is capable of recognizing even more detailed motions by considering the volume or physical characteristics of the object.

Additionally, in configuring the artificial intelligence model, a method in which similarity analysis can be performed, even for poses and motions that are not previously trained, by using a machine-trained artificial intelligence model based on metric learning, is proposed.

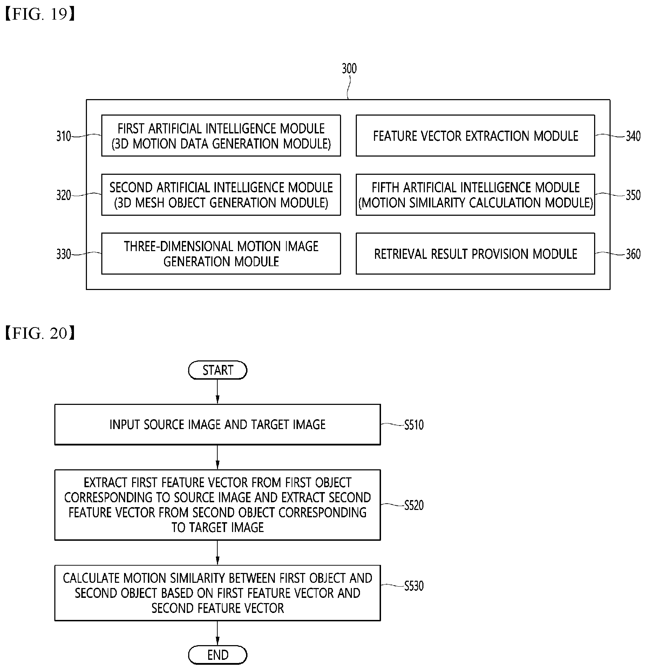

FIG. 19 is a diagram representing an exemplary configuration of an apparatus for calculating motion similarity of an object based on artificial intelligence, according to an embodiment of the present invention. With reference to FIG. 19, an apparatus 300 for calculating motion similarity of an object may include a first artificial intelligence module 310, a second artificial intelligence module 320, a three-dimensional motion image generation module 330, a feature vector extraction module 340, a fifth artificial intelligence module 350, and a retrieval result provision module 360.

The apparatus 300 for calculating motion similarity of an object may have some configurations identical to those of the apparatus 100 for generating a three-dimensional motion image in FIG. 2. For example, the first artificial intelligence module 310, the second artificial intelligence module 320, and the three-dimensional motion image generation module 330 may respectively have the same configuration as the first artificial intelligence module 110, the second artificial intelligence module 120, and the three-dimensional motion image generation module 130 in FIG. 2. Accordingly, to avoid redundant description, specific description of the first artificial intelligence module 310, the second artificial intelligence module 320, and the three-dimensional motion image generation module 330 will be omitted in the present embodiment.

The feature vector extraction module 340 is a module that extracts, from the three-dimensional mesh object, a feature vector thereof. The feature vector is a value that represents the pose and motion of the three-dimensional mesh object, and may include values that represent the directionality and trend of each mesh data constituting the three-dimensional mesh object.

The fifth artificial intelligence module 350 is a module that calculates motion similarity between three-dimensional mesh objects based on feature vectors extracted from a plurality of three-dimensional mesh objects. The fifth artificial intelligence module 350 is a machine-trained module based on training data, and may be a machine-trained module based on metric learning.

The retrieval result provision module 360 is a module that, based on the motion similarity calculated by the fifth artificial intelligence module 350, selects a target image having a pose and motion similar to a source image, and provides it as a retrieval result, or outputs the motion similarity between the source image and the target image as a specific value or grade.

The specific functions and/or learning method of the feature vector extraction module 340, the fifth artificial intelligence module 350, and the retrieval result provision module 360 will be described in more detail with reference to FIG. 20 and thereafter.

FIG. 20 is a flowchart representing a method of calculating motion similarity of an object based on artificial intelligence, according to an embodiment of the present invention. The method of calculating motion similarity of an object in FIG. 20 may be performed by the apparatus 300 for calculating motion similarity of an object in FIG. 19. Therefore, in the following steps, when an executing entity is omitted, it is assumed that the executing entity is the apparatus 300 for calculating motion similarity of an object.

In step S510, a source image and a target image are input.

Here, the source image is an image that serves as a reference for motion comparison, and the target image is an image that serves as a target of motion comparison. For example, when a first image is acquired and a second image similar in motion to the first image is to be then found and motion similarity thereof is to be calculated, the first image becomes a source image and the second image becomes a target image.

As an embodiment, the target image may be a pre-stored image in a database inside the apparatus 300 for calculating motion similarity of an object, along with other target images, and may be an image that is sequentially read out from the database together with the other target images for motion comparison with the source image.

In step S520, a first feature vector is extracted from a first object corresponding to the source image, and a second feature vector is extracted from a second object corresponding to the target image.

As an embodiment, the first object and the second object may be three-dimensional mesh objects.

The first object may be an object in the source image, or an object newly processed or generated based on the object in the source image. Similarly, the second object may also be an object in the target image, or an object newly processed or generated based on the object in the target image.

The first feature vector is a vector that represents the pose and motion of the first object. The first feature vector may include values that represent the directionality and trend for each of the plurality of mesh data constituting the first object.

Likewise, the second feature vector is a vector that represents the pose and motion of the second object, and may include values that represent the directionality and trend for each of the plurality of mesh data constituting the second object.

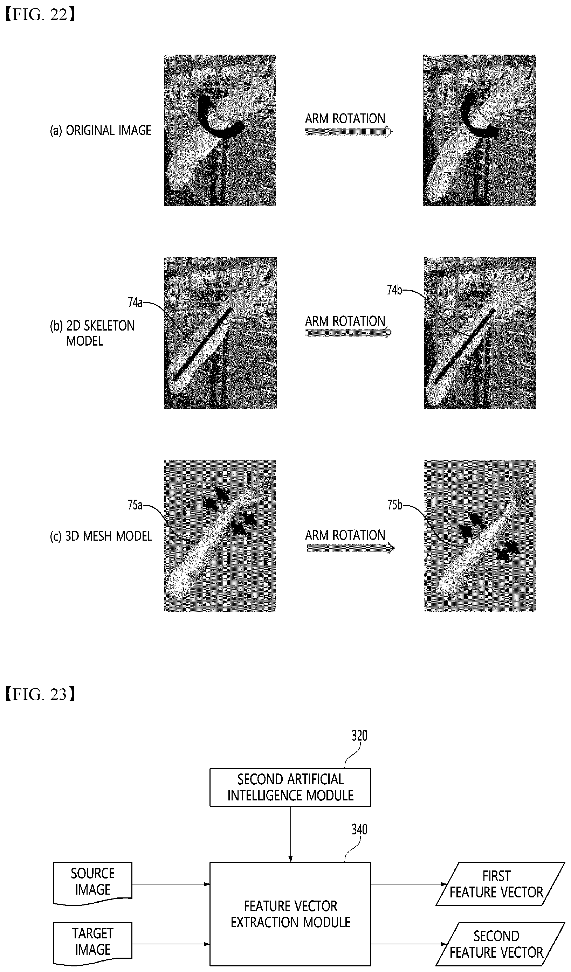

Detailed descriptions of the extraction of the first feature vector and the second feature vector will be provided with reference to FIG. 23 and thereafter.

In step S530, based on the first feature vector and the second feature vector, the motion similarity between the first object and the second object is calculated.

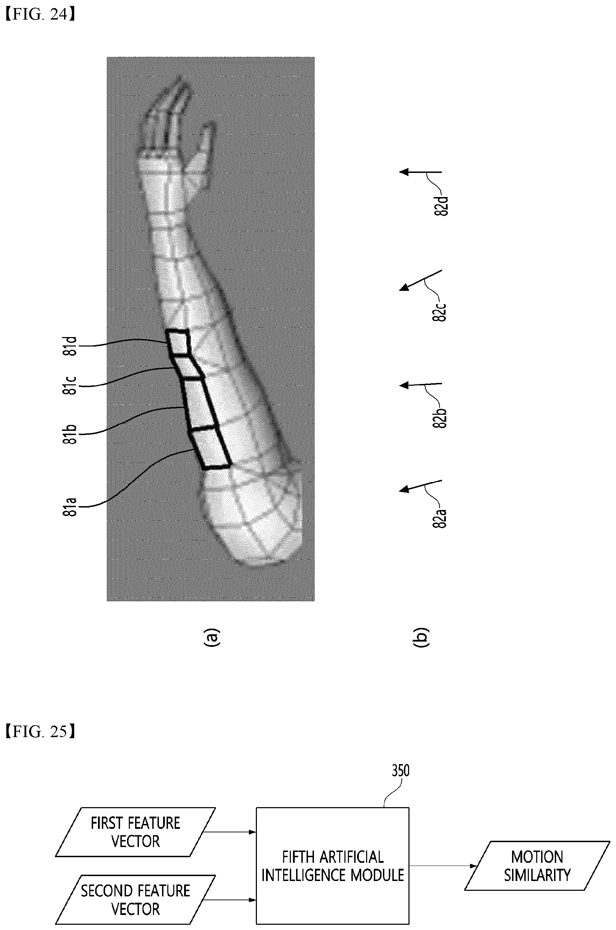

As an embodiment, the motion similarity may be calculated using a machine-trained artificial intelligence module based on metric learning. The machine learning method based on metric learning, and the motion similarity calculation between objects using the same, will be described in further detail with reference to FIG. 25 and thereafter.

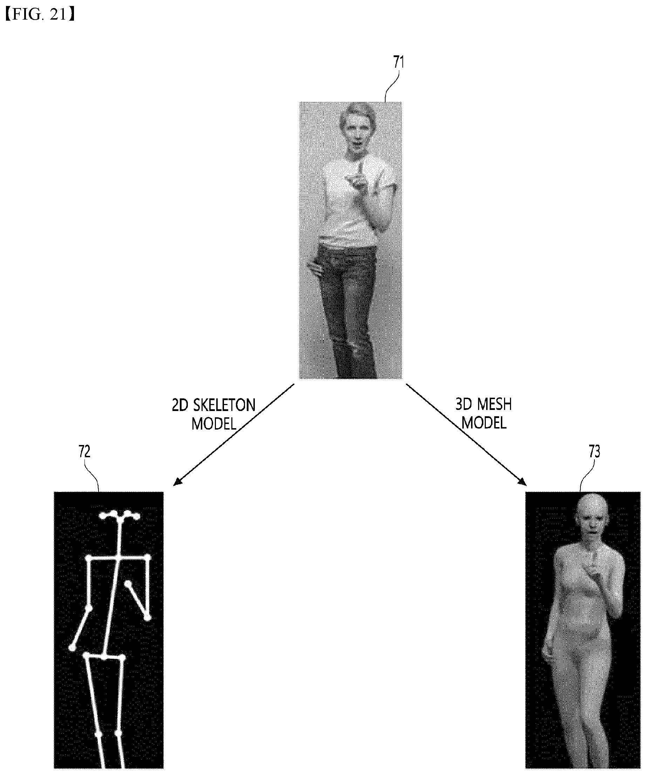

FIGS. 21 and 22 are diagrams for explaining characteristics when a three-dimensional mesh model is used in comparing motion similarity of objects.

With reference to FIG. 21, an example is illustrated in which a two-dimensional (or 2D) skeleton model 72 is estimated and a three-dimensional (or 3D) mesh model 73 is estimated based on an original image 71.

The two-dimensional skeleton model 72 is configured by estimating joint points and lines connecting the joint points from the original image 71. The three-dimensional mesh model 73 also estimates joint points and lines connecting the joint points from the original image 71, which is the same, but in addition, the texture and depth of the object are estimated, and then such are configured into a form of a three-dimensional mesh with volume.

When estimating the motion of the object, in case of using the two-dimensional skeleton model 72, the motion of the object is estimated based on the positions and motions of the joint points and lines. In contrast, in case of using the three-dimensional mesh model 73, the motion of the object is estimated by considering not only the joint points and lines, but also the mesh data. As a result, when using the three-dimensional mesh model 73, it becomes possible to recognize the motion in more detail by further considering the volume and physical characteristics of the object.

For supplementary description thereof, FIG. 22 is referenced.

FIG. 22 illustrates a difference in recognition performance between using a two-dimensional skeleton model and using a three-dimensional mesh model for an arm rotation motion.

FIG. 22(a) illustrates an arm rotation motion in an original image. FIG. 22(b) illustrates a case where the arm rotation motion is recognized based on a two-dimensional skeleton model, and FIG. 22(c) illustrates a case where the arm rotation motion is recognized based on a three-dimensional mesh model.

With reference to FIG. 22(b), since the two-dimensional skeleton model recognizes the motion of the object based on the positions of joint points and lines, there is a problem in that, in case like the arm rotation motion, where there is almost no change in the positions of the joint points and lines between before the motion 74a and after the motion 74b, the corresponding motion is not properly recognized.

In contrast, with reference to FIG. 22(c), since the three-dimensional mesh model recognizes the motion of the object by considering not only the joint points and lines, but also the mesh data, even in case where there is almost no change in the positions of the joint points and lines, it becomes possible to accurately recognize the corresponding motion through changes in the mesh data between before the motion 75a and after the motion 75b.

FIGS. 23 and 24 are diagrams for supplementary description of step S520 of FIG. 20.

With reference to FIG. 23, a feature vector extraction module 340 that extracts feature vectors from the source image and the target image, respectively, is illustrated.

When the source image is input to the feature vector extraction module 340, a first feature vector is extracted from a first object corresponding to the source image.

In this case, the first object may be an object in the source image, or an object newly generated based on the object in the source image. For example, when the source image is a three-dimensional image and includes a three-dimensional mesh object therein, the first object may be an extraction of the three-dimensional mesh object in the source image. In contrast, when the source image is a two-dimensional image and an object in the source image is a two-dimensional object, the first object may be a three-dimensional mesh object that is generated by extracting the two-dimensional object from the source image, and then estimating the texture and volume of the two-dimensional object using an artificial intelligence module. In this case, the estimation and generation of the three-dimensional mesh object may use the second artificial intelligence module 320.

Similarly, when the target image is input to the feature vector extraction module 340, a second feature vector is extracted from a second object corresponding to the target image.

The second object may also be an object in the target image, or an object newly generated based on the object in the target image. For example, when the target image includes a three-dimensional mesh object therein, the second object may be an extraction of the three-dimensional mesh object in the target image. Alternatively, when the object in the target image is a two-dimensional object, the second object may be a three-dimensional mesh object that is generated by extracting the two-dimensional object from the target image, and then estimating the texture and volume of the two-dimensional object using an artificial intelligence module. In this case as well, the estimation and generation of the three-dimensional mesh object may use the second artificial intelligence module 320.

As an embodiment, the feature vector extraction module 340 may extract the first feature vector and the second feature vector from the first object and the second object, respectively, using a skinned multi-person linear (SMPL) model. The SMPL model is a solution used to estimate the pose of an object based on a three-dimensional mesh model, and since the specific technical contents related to the SMPL model are widely known in the art, the description thereof will be omitted here.

Meanwhile, the first feature vector may include a first mesh vector that represents each of a first plurality of meshes constituting the first object, and a first trend vector that represents the trend of change in the first mesh vector.

Similarly, the second feature vector may include a second mesh vector that represents each of a second plurality of meshes constituting the second object, and a second trend vector that represents the trend of change in the second mesh vector.

For supplementary description thereof, FIG. 24 is referenced.

FIG. 24(a) illustrates an arm portion of a human body as a three-dimensional mesh object. FIG. 24(b) illustrates mesh vectors that represent the directionality of each mesh data constituting the three-dimensional mesh object.

For simplification of the description, when taking only four mesh data 81a, 81b, 81c, and 81d among the mesh data constituting the three-dimensional mesh object as an example, mesh vectors 82a, 82b, 82c, and 82d corresponding to each mesh data 81a, 81b, 81c, and 81d are extracted by the feature vector extraction module 340.

As an embodiment, the mesh vectors 82a, 82b, 82c, and 82d may be normal vectors of the corresponding mesh data 81a, 81b, 81c, and 81d, respectively. For example, the mesh vector 82a may be an extraction of a normal vector from the mesh data 81a, the mesh vector 82b may be an extraction of a normal vector from the mesh data 81b, the mesh vector 82c may be an extraction of a normal vector from the mesh data 81c, and the mesh vector 82d may be an extraction of a normal vector from the mesh data 81d.

Meanwhile, although the respective mesh vectors 82a, 82b, 82c, and 82d are exemplified here as the normal vectors of the mesh data 81a, 81b, 81c, and 81d, the scope of the present invention is not limited thereto. For example, as long as it is a vector that may represent the mesh data 81a, 81b, 81c, 81d while indicating the directionality of the mesh data 81a, 81b, 81c, 81d, any such vector may serve as a mesh vector.

Meanwhile, the feature vector extraction module 340 may further extract a trend vector representing the trend of change in the mesh vectors 82a, 82b, 82c, and 82d. As an embodiment, the trend vector may be a vector representing the trend of change in each of the mesh vectors 82a, 82b, 82c, and 82d across consecutive frames of the image, and may be a vector that represents the trend in terms of magnitude and direction.

The mesh vector and trend vector extracted by the feature vector extraction module 340 may be extracted and provided as the feature vector of the object.

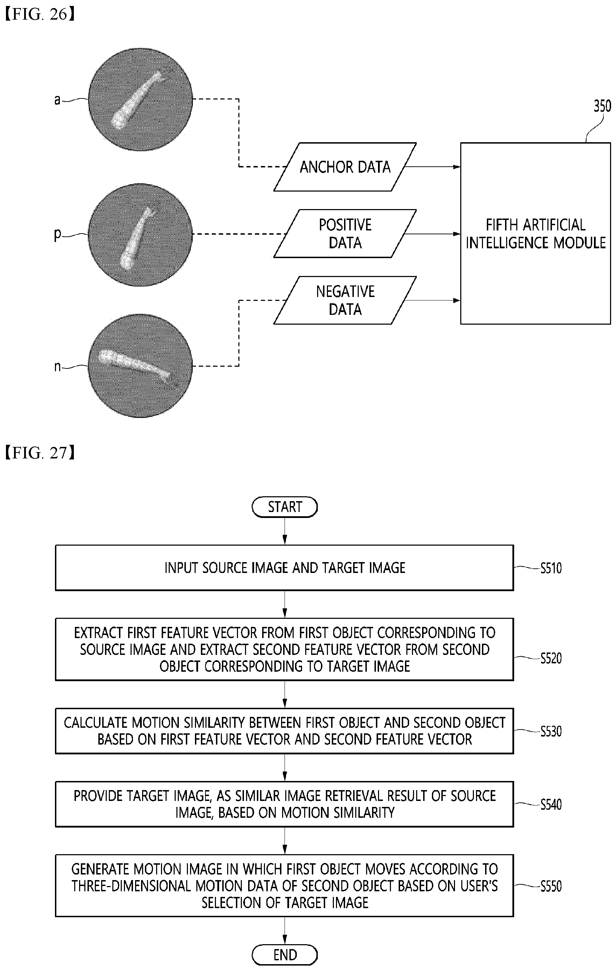

FIGS. 25 and 26 are diagrams for supplementary description of step S530 of FIG. 20.

With reference to FIG. 25, the fifth artificial intelligence module 350 that calculates motion similarity between a first object and a second object based on a first feature vector and a second feature vector is illustrated.

The fifth artificial intelligence module 350 is a machine-trained artificial intelligence module that receives, as input, the first feature vector extracted from the first object and the second feature vector extracted from the second object, calculates a distance between the first feature vector and the second feature vector based thereon, and then outputs the motion similarity between the first object and the second object based on the calculated distance.

As an embodiment, the motion similarity may be calculated to be higher as the distance between the first feature vector and the second feature vector becomes closer.

As described above, the fifth artificial intelligence module 350 may be a module machine-trained by a metric learning method.

As a representative conventional method for calculating motion similarity of an object, a cosine similarity method is known. In the cosine similarity method, motion similarity is determined based on absolute coordinates. Accordingly, when comparing the motion of an adult dancing with the motion of a child dancing, although the overall pose and motion may be similar, the coordinates recognized from the adult object and the coordinates from the child object differ greatly, resulting in determination of non-similarity.

In contrast, when determining motion similarity of an object using a model trained by a metric learning method, the motion similarity is determined based on the directionality and trend of each object, so when the overall pose and motion are similar, the motion of an adult and the motion of a child are also determined to be similar.

The learning method of the fifth artificial intelligence module 350 based on metric learning will now be described with reference to FIG. 26.

The metric learning-based machine learning is intended to determine similarity by focusing on whether the characteristics of two targets are similar or different. That is, when training the artificial intelligence module, "classification" is not performed, but a metric that calculates the distance indicating whether the targets are similar or different is used. Since specific technical contents regarding metric learning are widely known in the art, a description thereof will be omitted here.

In FIG. 26, the fifth artificial intelligence module 350 receives, as training data, anchor data, positive data, and negative data as input. The anchor data may be a value corresponding to reference data (a) and may be a feature vector extracted from the reference data (a). The positive data may be a value corresponding to similar data (p) to the reference data (a) and may be a feature vector extracted from the similar data (p). The negative data may be a value corresponding to different data (n) from the reference data (a) and may be a feature vector extracted from the different data (n).

When the anchor data, positive data, and negative data are input, the fifth artificial intelligence module 350 is trained such that the distance to the positive data similar to the anchor data becomes closer, and the distance to the different negative data becomes farther, based on the anchor data. That is, the fifth artificial intelligence module 350 learns about features so as to recognize that the anchor data and the positive data are similar to each other, and that the anchor data and the negative data are different from each other.

The fifth artificial intelligence model 350, trained in this manner, becomes capable of distinguishing between similar poses and motions and dissimilar poses and motions, and can perform similarity analysis even for poses and motions that were not previously trained.

FIG. 27 is a flowchart representing a method of calculating motion similarity of an object based on artificial intelligence, according to another embodiment of the present invention. In the embodiment of FIG. 27, steps S510 to S530 are the same as steps S510 to S530 of FIG. 20. However, this embodiment differs in that it further includes step S540 and step S550. In the present embodiment, to avoid redundancy in description, the description of steps S510 to S530 will be omitted.

In step S540, based on the motion similarity, a target image is provided as a similar image retrieval result of a source image. The retrieval result provision may be performed by the retrieval result provision module 360.

As an embodiment, when the calculated motion similarity exceeds a predetermined threshold, the target image is determined to be a similar image to the source image, and thus, the target image is provided as the retrieval result corresponding to the source image. In contrast, when the calculated motion similarity is less than the predetermined threshold, the target image is determined not to be a similar image to the source image, and thus, the target image is not provided as the retrieval result.

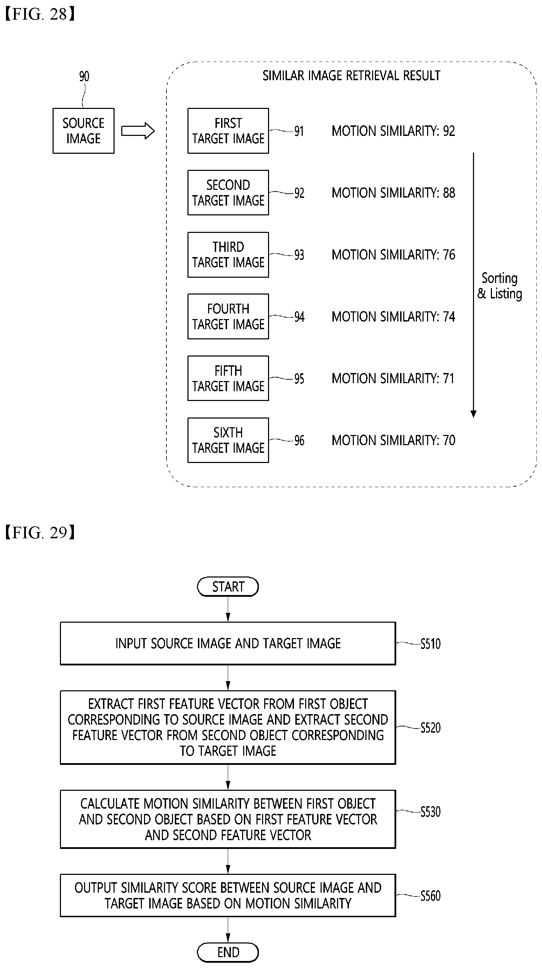

Meanwhile, as illustrated in FIG. 28, the retrieval result may be provided in a listing form of a plurality of target images whose motion similarity with the source image exceeds the predetermined threshold.

For example, it is assumed that a plurality of target images are stored in a database, and that motion similarity with a source image 90 has been calculated for each target image by the method described with reference to FIGS. 20 to 26.

Among them, target images 91, 92, 93, 94, 95, and 96, whose motion similarity exceeds a predetermined threshold, may be sorted according to an order of the magnitude of the motion similarity and listed, and provided as a similar image retrieval result of the source image 90.

In step S550, based on a user's selection of the target image provided as the retrieval result, three-dimensional motion data of a second object is merged into a first object, and a motion image in which the first object moves according to the three-dimensional motion data is generated.

For example, when a user captures his or her own motion and inputs it as a source image, and retrieves an image having a motion similar thereto among the target images stored in the database, a target image whose motion similarity with the source image is equal to or greater than a threshold may be provided as a similar image retrieval result by the method of calculating motion similarity of an object according to the present invention. In this case, when a target image is selected through a provided user interface, motion data of a sample object (corresponding to the second object) in the target image may be combined with a user appearance (corresponding to the first object) extracted from the source image, so that a motion image in which the appearance is of the user but the motion follows the motion of the sample object may be generated.

As an embodiment, the extraction of the user appearance may be performed using the second artificial intelligence module 320, the extraction of the motion data of the sample object may be performed using the first artificial intelligence module 310, and the combination of the user appearance and the motion data may be performed by the three-dimensional motion image generation module 330.

FIG. 29 is a flowchart representing a method of calculating motion similarity of an object based on artificial intelligence, according to still another embodiment of the present invention. In the embodiment of FIG. 29, steps S510 to S530 are the same as steps S510 to S530 of FIG. 20. However, this embodiment differs in that it further includes step S560. In the present embodiment, to avoid redundancy in description, the description of steps S510 to S530 will be omitted.

In step S560, a similarity score between the source image and the target image is output based on motion similarity.

As an embodiment, the similarity score may be output as a numerical score or a grade according to a range of the score.

For example, the similarity score may be output as a numerical score such as 76 points, 86 points, or 96 points, or may be output as a grade according to the score range, such as a C grade for 70 points or more and less than 80 points, a B grade for 80 points or more and less than 90 points, and an A grade for 90 points or more.

The output of the similarity score may be used in applications such as games, etc. For example, in a game set to follow the motion in a specific image, the user's motion imitating the motion in the specific image is captured, and the motion in the captured image is compared with the motion in the specific image to calculate the motion similarity between them, and the similarity score corresponding thereto may be output as a result of the user's gameplay.

According to the above-described embodiments of the present invention, by mutually comparing the pose and motion of an object using a three-dimensional mesh model, motion similarity can be calculated more accurately by even taking into account physical characteristics of the object.

In addition, by using an artificial intelligence model machine-trained based on metric learning, similarity analysis may be performed even for untrained poses and motions.

### -Generating three-dimensional motion image from input sentence-

In the present embodiment, a technology is proposed for automatically generating a three-dimensional motion image corresponding to the meaning of an input sentence by analyzing the input sentence in text format.

For example, by generating various motion images in advance and storing them in a database, when a sentence such as "a person walks" is input, a motion image representing a person walking may be retrieved from the database and output. In the same manner, the present invention is intended to propose a technology for automatically generating a three-dimensional motion image representing the overall meaning of an input sentence by retrieving motion images from the database that represent the meanings of each phrase in the input sentence, and combining the retrieved motion images.

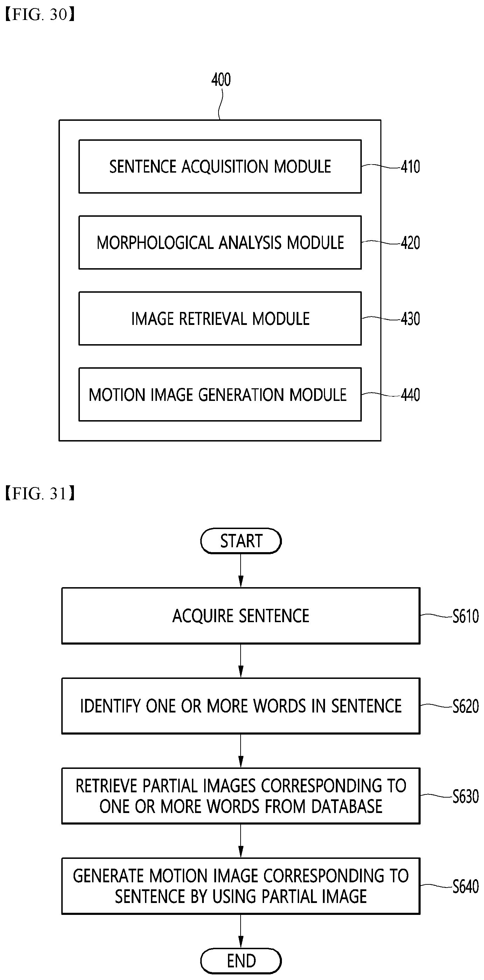

FIG. 30 is a diagram representing an exemplary configuration of an apparatus for generating a motion image, according to an embodiment of the present invention. With reference to FIG. 30, an apparatus 400 for generating a motion image is an apparatus that automatically generates a three-dimensional motion image from a sentence, and may include a sentence acquisition module 410, a morphological analysis module 420, an image retrieval module 430, and a motion image generation module 440.

The sentence acquisition module 410 is a module that acquires a sentence used for generating a three-dimensional motion image. The sentence acquisition module 410 may directly receive the sentence in text form through a user interface, or may acquire the sentence by converting a voice signal input through a voice input means into text.

The morphological analysis module 420 is a module that analyzes the acquired sentence, distinguishes words in the sentence, and identifies the part of speech of each word.

The image retrieval module 430 is a module that retrieves, from a database, a partial image having a corresponding meaning for a word whose part of speech has been identified.

The motion image generation module 440 is a module that generates a motion image corresponding to the overall meaning of the acquired sentence by combining the retrieved partial images. In this case, the motion image generation module 440 may generate an intermediate image so that the partial images are naturally connected to each other when the partial images are combined, and insert the intermediate image between the partial images.

The specific operation method of the motion image generation module 440 will be described in detail with reference to FIG. 31.

As an embodiment, the sentence acquisition module 410, the morphological analysis module 420, the image retrieval module 430, and/or the motion image generation module 440 may include a machine-trained artificial intelligence module. For example, the sentence acquisition module 410 may include a machine-trained artificial intelligence module configured to recognize a voice and automatically convert the recognized voice into text, the morphological analysis module 420 may include a machine-trained artificial intelligence module configured to distinguish each word of a sentence in text format and identify the part of speech of the distinguished word, the image retrieval module 430 may include a machine-trained artificial intelligence module configured to selectively retrieve, from a database, a partial image corresponding to the meaning of a specific word, and the motion image generation module 440 may include a machine-trained artificial intelligence module configured to determine the order of placement of each partial image according to the context when generating an entire motion image by combining a plurality of partial images, and to generate an intermediate image to be inserted between the partial images so that the beginning and end of each partial image are naturally connected.

FIG. 31 is a flowchart representing a method of generating a motion image from a sentence, according to an embodiment of the present invention. The method of generating a motion image from a sentence illustrated in FIG. 31 may be performed by the apparatus 400 for generating a motion image of FIG. 30. Therefore, in the following steps, when an executing entity is omitted, it is assumed that the executing entity is the apparatus 400 for generating a motion image.

In step S610, a sentence for generating a three-dimensional motion image is acquired.

As an embodiment, the sentence may be acquired based on text input through a user interface. Alternatively, the sentence may be acquired by converting a voice signal input through a voice input means into text, based on an artificial intelligence model. Since the specific technical content of the method of converting a voice signal into text based on an artificial intelligence model is well known in the art, a specific description thereof will be omitted here.

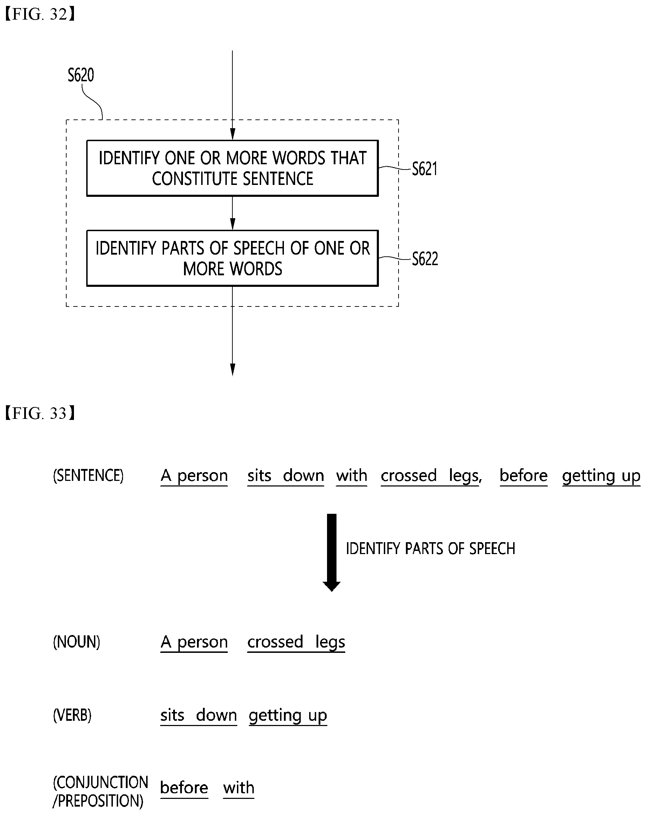

In step S620, one or more words in the sentence are identified. For specific description thereof, FIG. 32 is referenced.

FIG. 32 is a flowchart representing an embodiment detailing step S620 of FIG. 31.

In step S621, one or more words constituting the sentence are identified.

In step S622, the part of speech of each of the identified one or more words is identified.

As an embodiment, the identification of the one or more words, and the identification of the part of speech thereof, may be performed by a machine-trained artificial intelligence module for natural language processing.

For supplementary description thereof, FIG. 33 is referenced.

In FIG. 33, an example is illustrated in which a sentence, "A Person sits down with crossed legs, before getting up", is input for generating a three-dimensional motion image.

In this case, each word and its part of speech in the sentence are identified by the morphological analysis module 420, and, as illustrated in FIG. 33, the words may be distinguished and classified by each part of speech.

Returning back to FIG. 31, in step S330, a partial image corresponding to the one or more words is retrieved from a database. As an embodiment, the database may be configured to store a plurality of three-dimensional motion images generated by the method of generating a three-dimensional motion image described in FIGS. 1 to 9. The plurality of three-dimensional motion images stored in the database may be used as partial images for generating a motion image corresponding to the meaning of a sentence.

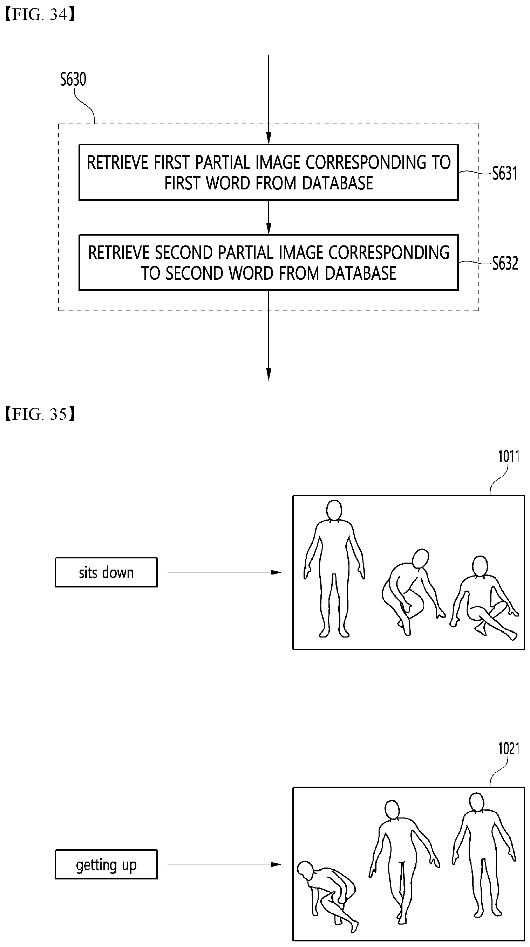

Meanwhile, for more specific description of the embodiment illustrated in FIG. 33, FIG. 34 is referenced.

FIG. 34 is a flowchart representing an embodiment detailing step S630 of FIG. 31.

In the present embodiment, a case is exemplified in which at least two words are identified from a sentence, and partial images corresponding to each of the at least two words are retrieved.

First, in step S631, a first partial image corresponding to a first word is retrieved from the database.

Next, in step S632, a second partial image corresponding to a second word is retrieved from the database.

For supplementary description thereof, FIG. 35 is referenced.

With reference to FIG. 35, a case is exemplified in which, among the previously distinguished and classified words, a first partial image 1011 corresponding to the first word "sits down" and a second partial image 1021 corresponding to the second word "getting up" are respectively retrieved from a database (not illustrated).

The first partial image 1011 is an image corresponding to the meaning of the first word "sits down," and is an image representing a motion of a person sitting down. The second partial image 1021 is an image corresponding to the meaning of the second word "getting up," and is an image representing a motion of a person getting up.

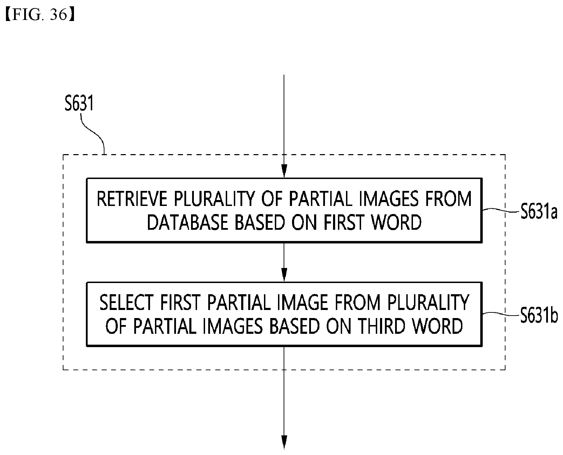

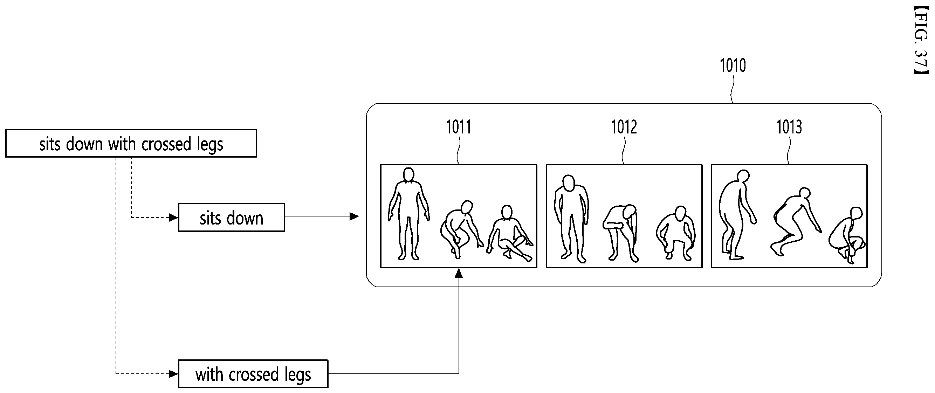

Meanwhile, when finding a partial image corresponding to the meaning of each word, other words associated with the corresponding word may be further referenced to find a partial image that better fits the context. For supplementary description thereof, FIGS. 36 and 37 are jointly referenced.

First, in step S631a, a plurality of partial images is retrieved from the database based on the first word. For example, when the first word is "sits down," and partial images corresponding to the meaning of the first word are retrieved, a plurality of partial images representing various types of sitting motions may be retrieved.

For example, as illustrated in FIG. 37, for "sits down," a plurality of partial images 1010 may be retrieved, including a partial image 1011 representing sitting down with crossed legs, a partial image 1012 representing squatting down, and a partial image 1013 representing sitting sideways. Since all of the retrieved partial images 1011, 1012, and 1013 represent motions corresponding to the meaning of "sits down," it is difficult to specify a single most suitable partial image among the partial images 1011, 1012, and 1013 based only on "sits down."

In step S631b, a first partial image is selected from among the plurality of partial images based on a third word. In this case, the third word may be a word associated with the first word. For description thereof, FIG. 37 is referenced again.

With reference to FIG. 37, the third word "with crossed legs" is identified as a word associated with the first word "sits down." As described above, it was difficult to specify the most suitable partial image among the partial images 1011, 1012, and 1013 using only "sits down," but by referring to "with crossed legs" together, the first partial image 1011 may be specified and selected as the partial image most suitable for the context.

Meanwhile, although a case was exemplified in which a reference of an associated word (i.e., the third word) is used when retrieving the first partial image, similarly, an associated word may be referenced when retrieving the second partial image as well.

For example, when there is a fourth word associated with the second word in the sentence, and a plurality of partial images are retrieved for the second word, one of the plurality of partial images that is most suitable for the context may be specified and selected by referring to the fourth word.

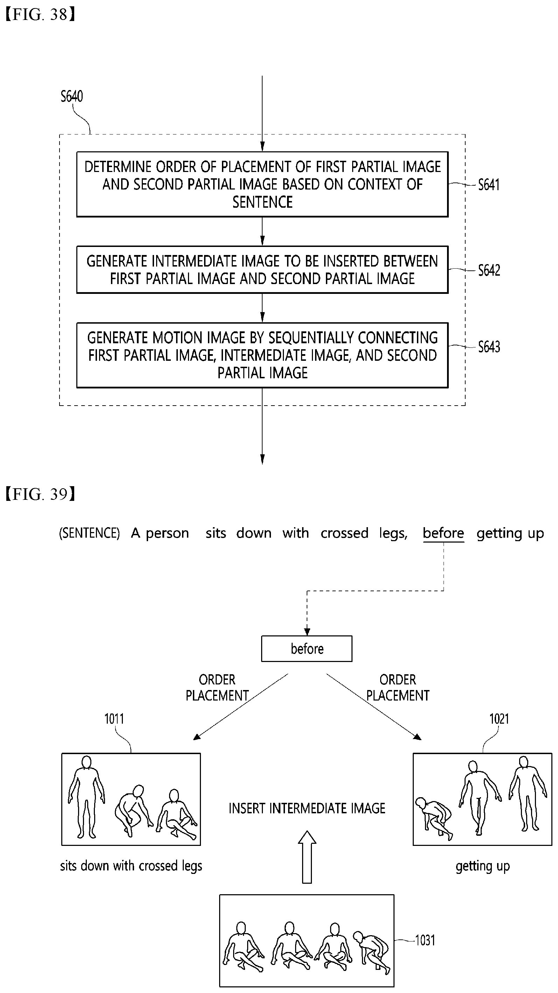

Returning back to FIG. 31, in step S640, a motion image corresponding to the sentence is generated using the partial images. For specific description thereof, FIG. 38 is referenced.

FIG. 38 is a flowchart representing an embodiment detailing step S640 of FIG. 31.

In step S641, based on the context of the sentence, an order of placement between the first partial image and the second partial image is determined. In the present embodiment, it is assumed that, according to the context, the first partial image is placed immediately before the second partial image.

In step S642, an intermediate image to be inserted between the first partial image and the second partial image is generated. In this case, the intermediate image may be an image generated to naturally connect a pose of an object in a first frame of the first partial image and a pose of the object in a second frame of the second partial image.

In step S643, the first partial image, the intermediate image, and the second partial image are sequentially connected, and a three-dimensional motion image corresponding to the entire meaning of the sentence is generated.

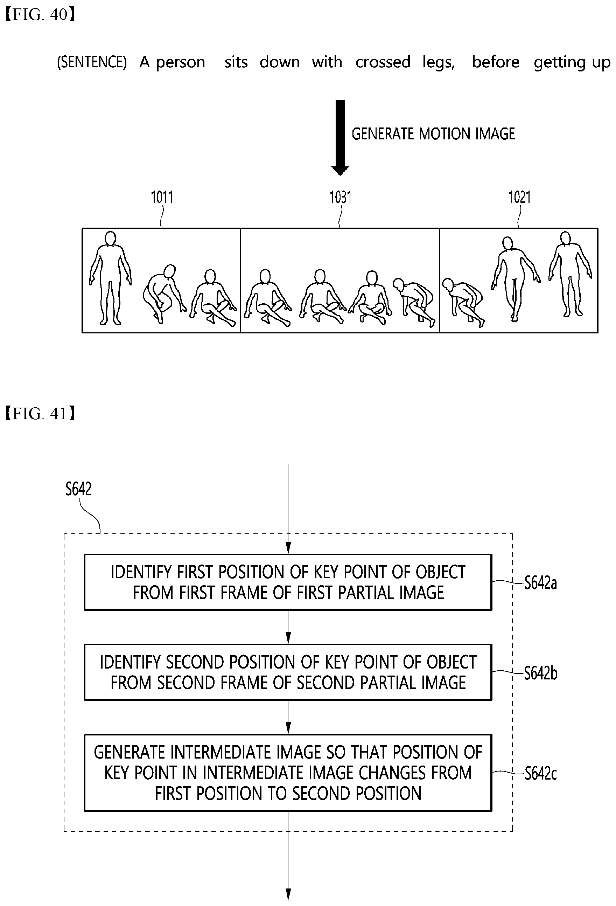

For supplementary description thereof, FIGS. 39 and 40 are referenced.

With reference to FIG. 39, an example is illustrated in which the order of placement of each partial image is determined based on context, and an intermediate image is inserted between the respective partial images.

In FIG. 39, considering the context of the sentence, it can be seen that the motion "sits down" temporally precedes the motion "getting up" due to the preposition "before" in the sentence. Accordingly, the first partial image 1011 corresponding to "sits down" is placed in front, and the second partial image 1021 corresponding to "getting up" is placed in the rear.

In this case, when the last frame (the first frame in FIG. 38) of the first partial image 1011 and the first frame (the second frame in FIG. 38) of the second partial image 1021 are examined, the poses of the object differ from each other, so that when the first partial image 1011 and the second partial image 1021 are directly connected, unnaturalness occurs in the form of discontinuity in the pose of the object at the connection point of the partial images 1011 and 1021.

Therefore, in order to naturally connect the pose of the object in the last frame of the first partial image 1011 and the pose of the object in the first frame of the second partial image 1021, an intermediate image 1031 is generated and inserted between the first partial image 1011 and the second partial image 1021.

With reference to FIG. 40, an example is illustrated in which a three-dimensional motion image is generated by sequentially connecting the first partial image, the intermediate image, and the second partial image.

The generated three-dimensional motion image represents a motion in which a person sits down with crossed legs and then gets up again, thus corresponding to the meaning of the sentence.

In this case, by inserting the intermediate image 1031 between the first partial image 1011 and the second partial image 1021, it can be seen that the pose of the object is connected continuously and naturally from the beginning of the first partial image 1011 to the end of the second partial image 1021.

FIG. 41 is a flowchart representing an embodiment detailing step S642 of FIG. 38. FIG. 41 illustrates a specific method of generating the intermediate image.

In step S642a, a first position of a key point of the object is identified from the first frame of the first partial image.

In step S642b, a second position of the key point of the object is identified from the second frame of the second partial image.

In step S642c, an intermediate image is generated such that the position of the key point of the object in the intermediate image changes from the first position to the second position.

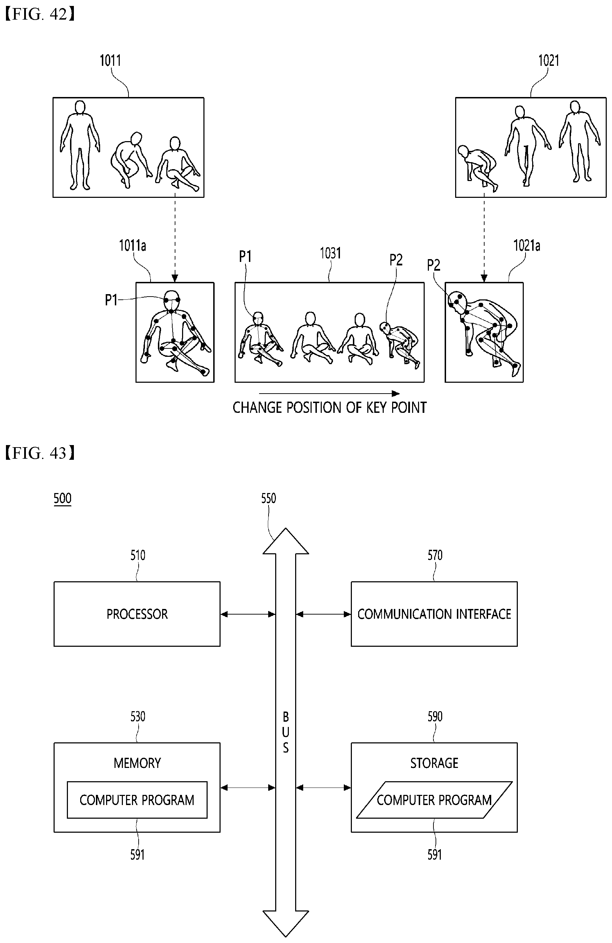

For supplementary description thereof, FIG. 42 is referenced.

In order to naturally connect the first partial image 1011 and the second partial image 1021, the position of a key point (a first position P1) of the object in the last frame 1011a of the first partial image 1011, and the position of a key point (a second position P2) of the object in the first frame 1021a of the second partial image 1021 are identified. Here, the key point may be a point indicating a joint portion of the object.

In this case, the intermediate image 1031 is generated such that the position of the key point of the object changes from the first position P1 to the second position P2 in the intermediate image 1031. The generation of the intermediate image 1031 may be performed by a machine-trained artificial intelligence module configured to generate a motion image that connects the pose of the object in the first frame to the pose of the object in the last frame, when the first frame and the last frame are given.

According to this method, even when the pose of the object in the first partial image 1011 and the pose of the object in the second partial image 1021 are discontinuous, the first partial image 1011 and the second partial image 1021 may be naturally connected through the intermediate image.

According to the embodiments of the present invention described above, when a sentence of content to be generated as a three-dimensional motion image is input as text or voice, the corresponding sentence may be analyzed and a motion image corresponding to the meaning of the sentence may be automatically generated.

In addition, partial images corresponding to the meanings of words in the sentence may be combined to generate an entire motion image, and appropriate intermediate images may be inserted between the partial images so that the connection between the respective partial images are natural.

Hereinafter, with reference to FIG. 43, an exemplary computing apparatus 500 in which the methods described in various embodiments of the present invention are implemented will be described. For example, the computing apparatus 500 in FIG. 43 may be the apparatus 100 for generating a three-dimensional motion image in FIG. 2, the apparatus 200 for generating an object image illustrated in FIG. 10, the apparatus 300 for calculating motion similarity of an object in FIG. 19, or the apparatus 400 for generating a motion image in FIG. 30.

FIG. 43 is an exemplary hardware configuration diagram representing the computing apparatus 500.

As illustrated in FIG. 43, the computing apparatus 500 may include one or more processors 510, a bus 550, a communication interface 570, a memory 530 that loads a computer program 591 executed by the processor 510, and a storage 590 that stores the computer program 591. However, in FIG. 43, only the components related to the embodiment of the present invention are illustrated. Therefore, it will be appreciated by those of ordinary skill in the art to which the present invention belongs that other general purpose components may be further included in addition to those illustrated in FIG. 43.

The processor 510 controls the overall operation of each component of the computing apparatus 500. The processor 510 may be configured to include at least one of a central processing unit (CPU), a micro processor unit (MPU), a micro controller unit (MCU), a graphic processing unit (GPU), or any other form of processor well known in the art of the present invention. In addition, the processor 510 may perform calculations for at least one application or program for executing methods/operations according to various embodiments of the present invention. The computing apparatus 500 may include one or more processors.

The memory 530 stores various types of data, commands, and/or information. The memory 530 may load one or more programs 591 from the storage 590 in order to execute methods/operations according to various embodiments of the present invention. An example of the memory 530 may be RAM, but is not limited thereto.

The bus 550 provides a communication function between the components of the computing apparatus 500. The bus 550 may be implemented as various types of buses, such as an address bus, data bus, and control bus.

The communication interface 570 supports wired or wireless Internet communication of the computing apparatus 500. The communication interface 570 may also support various communication methods other than Internet communication. To this end, the communication interface 570 may be configured to include a communication module well known in the art of the present invention.

The storage 590 may non-transitorily store one or more computer programs 591. The storage 590 may configured to include a non-volatile memory such as a read only memory (ROM), an erasable programmable ROM (EPROM), an electrically erasable programmable ROM (EEPROM), and a flash memory, a hard disc, a removable disc, or any type of computer-readable recording medium well known in the art to which the present disclosure pertains.

The computer program 591 may include one or more instructions in which methods/operations according to various embodiments of the present invention are implemented.

For example, the computer program 591 may include instructions to execute operations of: acquiring a two-dimensional image; extracting pose data of an object from the two-dimensional image using a machine-trained artificial intelligence model; generating three-dimensional modeling data based on the pose data; and generating a three-dimensional motion image using the three-dimensional modeling data.

Alternatively, the computer program 591 may include instructions to execute operations of: acquiring a first object image and a UV map corresponding to the first object image; and generating a second object image in which a part of a body of an object is restored, based on the first object image and the UV map, in which the first object image may be an image in which a part of the body of the object is cropped, hidden, or blocked.

Alternatively, the computer program 591 may include instructions to execute operations of: inputting a source image and a target image; extracting a first feature vector from a first object corresponding to the source image, and a second feature vector from a second object corresponding to the target image; and calculating motion similarity between the first object and the second object based on the first feature vector and the second feature vector, in which the first object and the second object are three-dimensional mesh objects, and the operation of calculating of the motion similarity is an operation of calculating the motion similarity by using a machine-trained artificial intelligence module based on metric learning.

Alternatively, the computer program 591 may include instructions to execute operations of: acquiring a sentence; identifying one or more words in the sentence; retrieving partial images corresponding to the one or more words from a database; and generating a motion image corresponding to the sentence using the partial images.

When the computer program 591 is loaded into the memory 530, the processor 510 may perform methods/operations according to various embodiments of the present invention by executing the one or more instructions.

The technical idea of the present invention described above may be implemented as a code readable by a computer on a computer-readable medium. The computer-readable recording medium may be, for example, a portable recording medium (CD, DVD, Blu-ray disk, USB storage device, or portable hard disk) or a fixed recording medium (ROM, RAM, or computer-installed hard disk). The computer program recorded on the computer-readable recording medium may be transmitted to different computing apparatus through a network, such as the Internet, and installed on the different computing apparatus, and thereby used on the different computing apparatus.

While the exemplary embodiments of the present invention have been described with reference to the accompanying drawings, those skilled in the art will understand that the present invention may be carried out in any other specific form without changing the technical spirit or an essential feature thereof. Therefore, it should be understood that the above-described exemplary embodiments are illustrative in all aspects and do not limit the present invention. The protective scope of the present invention should be construed based on the following claims, and all the technical spirit in the equivalent scope thereto should be construed as falling in the scope of the technical spirit defined by the present invention.

## Claims

1. A method of generating a three-dimensional motion image based on artificial intelligence, performed by a computing apparatus, the method comprising:
acquiring a two-dimensional image;
generating three-dimensional modeling data of an object by identifying the object from the two-dimensional image by using a machine-trained artificial intelligence module and analyzing a motion of the identified object; and
generating a three-dimensional motion image by using the three-dimensional modeling data.

2. The method of claim 1, wherein the generating of the three-dimensional modeling data comprises:
extracting pose data of the object from the two-dimensional image by using a first artificial intelligence module, and
generating three-dimensional motion data representing a motion of the object based on the pose data.

3. The method of claim 2, wherein the two-dimensional image includes a plurality of frames that represent a motion of the object in a time series,
wherein the first artificial intelligence module comprises:
a first sub-module based on a convolutional neural network that extracts the pose data of the object from a first frame among the plurality of frames; and
a second sub-module based on a recurrent neural network that provides information of a second frame among the plurality of frames to the first sub-module, and
wherein the second frame is a preceding frame of the first frame in the time series.

4. The method of claim 2, wherein the generating of the three-dimensional motion image comprises:
merging the three-dimensional motion data with a pre-stored three-dimensional character object, and generating a motion image in which motion of the three-dimensional character object is expressed.

5. The method of claim 4, wherein the three-dimensional motion data includes key point data corresponding to joint sites of the object.

6. The method of claim 5, wherein the generating of the motion image in which motion of the three-dimensional character object is expressed comprises:
retargeting of matching joint positions of the three-dimensional motion data with joint positions of the three-dimensional character object based on the key point data.

7. The method of claim 2, wherein the generating of the three-dimensional modeling data further comprises:
extracting shape information of the object from the two-dimensional image by using a second artificial intelligence module, and generating a three-dimensional mesh object in which a volume of the object is expressed based on the shape information.

8. The method of claim 7, wherein the generating of the three-dimensional motion image comprises:
merging the three-dimensional motion data with the three-dimensional mesh object, and generating a motion image in which motion of the three-dimensional mesh object is expressed.

9. The method of claim 7, wherein the second artificial intelligence module comprises:
a three-dimensional reconstruction module configured to generate a three-dimensional point cloud representing the object from the two-dimensional image; and
a mesh modeling module configured to generate the three-dimensional mesh object by performing three-dimensional mesh modeling and texture mapping based on the three-dimensional point cloud.

10. An apparatus for generating a three-dimensional motion image based on artificial intelligence, the apparatus comprising:
a processor;
a memory configured to load a computer program executed by the processor; and
a storage configured to store the computer program,
wherein the computer program includes instructions to execute:
acquiring a two-dimensional image;
extracting pose data of an object from the two-dimensional image by using a machine-trained artificial intelligence model, and generating three-dimensional modeling data based on the pose data; and
generating a three-dimensional motion image by using the three-dimensional modeling data.

11. A method of generating an object image based on artificial intelligence, performed by a computing apparatus, the method comprising:
acquiring a first object image and a UV map corresponding to the first object image; and
generating a second object image, in which a part of a body of an object is restored, based on the first object image and the UV map,
wherein the first object image is an image in which the part of the body of the object is cropped, hidden, or blocked.

12. An apparatus for generating an object image based on artificial intelligence, the apparatus comprising:
a processor;
a memory configured to load a computer program executed by the processor; and
a storage configured to store the computer program,
wherein the computer program includes instructions to perform:
acquiring a first object image and a UV map corresponding to the first object image; and
generating a second object image, in which a part of a body of an object is restored, based on the first object image and the UV map, and
wherein the first object image is an image in which the part of the body of the object is cropped, hidden, or blocked.

13. A method of calculating motion similarity of an object based on artificial intelligence, performed by a computing apparatus, the method comprising:
inputting a source image and a target image;
extracting a first feature vector from a first object corresponding to the source image, and a second feature vector from a second object corresponding to the target image; and
calculating motion similarity between the first object and the second object based on the first feature vector and the second feature vector,
wherein the first object and the second object are three-dimensional mesh objects, and
wherein the calculating of the motion similarity is calculating the motion similarity by using a machine-trained artificial intelligence module based on metric learning.

14. An apparatus for calculating motion similarity of an object based on artificial intelligence, the apparatus comprising:
a processor;
a memory configured to load a computer program executed by the processor; and
a storage configured to store the computer program,
wherein the computer program includes instructions to execute:
inputting a source image and a target image;
extracting a first feature vector from a first object corresponding to the source image, and a second feature vector from a second object corresponding to the target image; and
calculating motion similarity between the first object and the second object based on the first feature vector and the second feature vector,
wherein the first object and the second object are three-dimensional mesh objects, and
wherein the calculating of the motion similarity is calculating the motion similarity by using a machine-trained artificial intelligence module based on metric learning.

15. A method of generating a motion image from a sentence, performed by a computing apparatus, the method comprising:
acquiring a sentence;
identifying one or more words in the sentence;
retrieving partial images corresponding to the one or more words from a database; and
generating a motion image corresponding to the sentence by using the partial images.

16. An apparatus for generating a motion image, the apparatus comprising:
a processor;
a memory configured to load a computer program executed by the processor; and
a storage configured to store the computer program,
wherein the computer program includes instructions to execute:
acquiring a sentence;
identifying one or more words in the sentence;
retrieving partial images corresponding to the one or more words from a database; and
generating a motion image corresponding to the sentence using the partial images.
